(19) Europäisches Patentamt
European Patent Office
Office européen des brevets

(11) EP 3 417 413 B1

(12) **EUROPEAN PATENT SPECIFICATION**

(45) Date of publication and mention of the grant of the patent:
**12.07.2023 Bulletin 2023/28**

(21) Application number: **17752783.5**

(22) Date of filing: **18.02.2017**

(51) International Patent Classification (IPC):
***G06Q 20/32*** *(2012.01)*

(52) Cooperative Patent Classification (CPC):
**G06Q 20/3223; G06Q 20/3224; G06Q 20/3278**

(86) International application number:
**PCT/IB2017/050936**

(87) International publication number:
**WO 2017/141218 (24.08.2017 Gazette 2017/34)**

(54) **SYSTEM OF ASCERTAINMENT**

BESTIMMUNGSSYSTEM

SYSTÈME DE VÉRIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.02.2016 US 201662296625 P**

(43) Date of publication of application:
**26.12.2018 Bulletin 2018/52**

(73) Proprietor: **March Projection Limited**
**Hong Kong (HK)**

(72) Inventor: **CHAN, Kit Meng**
**Hong Kong (HK)**

(74) Representative: **Ashton, Gareth Mark et al**
**Baron Warren Redfern**
**1000 Great West Road**
**Brentford TW8 9DW (GB)**

(56) References cited:
**CN-A- 103 400 265**
**US-A1- 2006 237 531**
**US-A1- 2006 273 158**
**US-A1- 2012 203 605**
**US-A1- 2013 282 569**
**US-A1- 2014 095 251**
**US-A1- 2014 337 205**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 417 413 B1

## Description

### Technical Field

The field of invention generally relates to prevention of fraudulent use of user account in an operation, through verifying user identity and ascertaining user pertinence on the basis of data of user communication device.

### Background Art

The World Wide Web has paved way for ubiquitous online activities in addition to controls of smart devices; to sustain related operations, incumbent technologies entail user identification, including data encryption in transport, password entry, biometric scanning, etc. Contactless smart card with a standardized protocol in a data transfer mechanism (e.g., ISO 14443/NFC) is rife, yet user account information can be stolen and cloned in illegal abuse.

### Summary of Invention

In a fundamental aspect of the disclosed subject, the operating principle entails correlation of the user and communication device in pertinence and proximity. An ascertainer encompasses a tracking system ("tracking system") for locating and recording with respect to time data pertaining to the location, surroundings ("proximity data"), of a tracked user carried communication device possessing a unique identifier other than the IP address - with wireless telematics communicative capability ("user mobile device"), or, without wireless telematics communicative capability ("computing device"). The communication device transmits real-time proximity data to the tracking system through a network, which includes a combination of landline and wireless communicative infrastructure. The ascertainer ascertains communication devices as "venue related" - by performing a process - to at least one access point ("AP") disposed environment at a geographic location ("geo-location") acknowledged as a regular user visited location in accordance with user location records, and related to one another as devices that are "peering related".

### Technical Problem

Fraudulent use of user account information in credit card, payment card in POS transaction, ATM cash withdrawal, online purchase is rife - the only solutions are restricted to coding related only. US 2006/0237531 A1 discloses a method for facilitating the detection of misuse of an identity during an electronic transaction. A notification is received to authenticate the use of an identity at a first location, and the identity is associated with a first wireless terminal at a second location. An alert is generated if the first and second locations do not match in geographical proximity. US 2006/0273158 A1 discloses recognizing a credit card user as an authentic cardholder when a portable communication terminal of the user is within a predetermined range of a transaction terminal. US 2012/0203605 discloses a mobile device acquiring a QR code from a POS device, and sending an authorization request for payment from an account that is paired to the mobile device.

### Solution to Problem

According to the invention there is provided a method for authorizing an online operation as defined in claim 1, and an ascertainer device for authorizing an online operation as defined in claim 10. In an embodiment, the ascertainer performs user validation processes on the basis of the concurrent and tracked communication device proximity data, pertaining to the geographic location or surrounding short-range wireless access points for linkage, and "mobility data", comprising: web browsing history with a unique identifier of the device, IP address, and communicatively linked wireless AP ("venue AP") IP address, record of a code, or the like.

In an embodiment, a communication device opens up a series of web pages in a browsing path in an online operation that requires a user to transmit account information to a host; the communication device is imbedded with a client application, which is capable of recording, retrieving, importing (from another installed web browser) and exporting the mobility data to the ascertainer in an online user validation process to justify the pertinence between the online operation and the incumbent communication device. The ascertainer generates a status indicator (to be discussed further below) to demonstrate the result of the online user validation process. "Web browsing history" relevance to the online operation, ascertained in an online user validation process, comprises at least one of the following web browsing activities recorded with respect to time, within a time period or first threshold from the time of operation that transmits the user account information ("validation time"): browsed web pages entailed for performing the online operation, activated icons/links, first identifier of the communication device imbedded client application exporting the user account information, and the like.

Brief Description Of Drawings

FIG.1 illustrates an embodiment of a system with an ascertainer.

**FIG.2A** is a schematic representation of a communication device, comprising a controller imbedded with a client application.

**FIG.2B** is a schematic representation of the controller as a user mobile device.

**FIG.2C** is a schematic representation of the controller as a computing device.

**FIG.3** is a schematic representation of a communication system operation through short-range wireless pairing with an access point.

**FIG.4A** depicts a database 400 comprising data demonstrating whether or not a user mobile device is acknowledged as venue related to an environment.

**FIG.4B** depicts a database 410 comprising client device IP database **10.1.**

**FIG.4C** depicts a host proximity data storage structure 420 of a location database 10.2.

**FIG.5A** depicts a venue AP list 500 comprising access points available for providing short-range wireless pairing.

**FIG.5B** depicts an exemplary schematic representation of stored web browsing history data in a web browsing history 510.

**FIG.5C** depicts a database comprising a user blockchains path 520, recorded with respect to time by the tracking system.

FIG.6A is a schematic representation of a communication system that is not in accordance with all features of the invention.

FIG.6B depicts a website 650 pertaining to an online store.

FIG.6C depicts a communications group 680 for online fiscal transfer.

FIG.7 is a flowchart of an online user validation process in accordance with an embodiment of the invention.

FIG.8 is a flowchart of a user validation process that is not in accordance with all features of the invention.

Description of Embodiment

The present invention provides methods and apparatuses to ascertain online user validation process on the basis of web browsing activities recorded with respect to time, and, user validation process on the basis of proximity between a user communication device and an access device.

The following discussion references various embodiments, which should not be construed that the disclosure is merely limited to specifically described embodiments. Instead, any combination of the following features and elements, whether related to different embodiments or not, are contemplated to implement and practice the disclosure. Although embodiments may achieve advantages over other possible solutions, prior arts, whether or not a particular advantage is achieved by a given embodiment is not limiting of the disclosure. Likewise, reference to "the disclosure" shall not be construed as a generalization of any subject matter disclosed herein and shall not be considered as an element or limitation of the appended claims except where explicitly recited in a claim(s).

As will be appreciated, aspects of the present disclosure may be embodied as a processor mounted system, method or computer program product; and, accordingly take the form of an entirely hardware embodiment, an entirely software embodiment (including firmware, resident software, micro-code, etc.), or an embodiment combining hardware and software aspects that may generally be referred to herein as a "module", "device" or "system." Furthermore, aspects of the present disclosure may take the form of a computer program product embodied in one or more non-transitory computer-readable medium(s) having computer-readable program code encoded thereon.

Any combination of one or more non-transitory computer-readable medium(s) may be utilized, including a computer-readable signal medium or a computer-readable storage medium which may store data which may be read by a computer system. A computer-readable storage medium, or memory, may be, but not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: an electrical connection having one or more wires, a portable computer diskette, a hard disk, an erasable programmable read-only memory (EPROM or "Flash memory"), an optical storage device, a random access memory (RAM), a read-only memory (ROM), a portable compact disc read-only memory (CD-ROM), a magnetic storage device, or any suitable combination of the foregoing. In the context of this document, a computer-readable storage medium may be any tangible medium that can contain, or store a program for use by or in connection with an instruction execution system, apparatus or device.

Embodiments of the present disclosure are described below with reference to flowchart illustrations, block diagrams of methods, apparatuses (systems) and computer program products according to embodiments of the disclosure. Each block of the flowchart illustrations, block diagrams; and, combinations of blocks in the flowchart illustrations, block diagrams, can be implemented by computer program instructions, which may be stored in a computer-readable medium, provided to a processor of a general purpose computer, special purpose computer, or other programmable data processing apparatus to produce a machine, such that the instructions - when executed via the processor of the computer or other programmable data processing apparatus - create means or to function in a particular manner to implement the functions/acts specified in the flowchart; each block of the which may be executed as a computer-recordable code on a computer-readable recording medium.

The system may perform various steps and operations through data transmission and processing at various nodes. This system and node may be a specially-constructed device such as an electronic device, or, it may include one or more general-purpose computers - such as networked multiple computers or application servers - that can follow software instructions to perform the steps described herein. No limitation as to operation on a particular type of system or apparatus is implied. Software instructions may be stored in any computer readable storage medium, such as for example, magnetic or optical disks, cards, memory, and the like. No particular programming language is required; rather, any type of programming language can be used to implement the present invention, while the computer program code for carrying out operations for aspects of the present disclosure may be written in any combination of one or more programming languages.

The computer program instructions may also be loaded onto a computer, other programmable data processing apparatus, or other devices to cause a series of operative steps to be executed to produce a computer implemented process such that the instructions which execute on the computer, other programmable apparatus or other devices, provide processes for implementing the functions/acts specified in the flowchart, block diagram block or blocks.

**FIG.1** is a schematic block diagram illustrating an exemplary system **100,** which is without limitation any system that entails performance of a user validation process. An account (membership account issued by facilitator **103** as membership club, or payment network pertinent credit card issued by issuer **104** as bank, as examples) is issued to a user (not shown) pertaining to mobile device **183** ("user mobile device **183** account"), for use in a host **105** pertinent operation that requires the user validation process to be performed; in one embodiment, ascertainer **108** receives a user validation request message **110** - generated and sent by any one of the facilitator **103,** issuer **104,** host **105,** access device **185,** or a user mobile device **183** account pertinent payment network (not shown) - comprising selected information without the complete account number ("safe account info"), ascertainer **108** undertakes the user validation process to ascertain the host **105** pertinent operation is authorized by user mobile device **183** account.

[Table: 1 safe account info]

| Complete account number | Complete account name | Safe account info |
|---|---|---|
| 3002 1212 2020 2998 | Adam Kevin Smith | AKSmith30021212 |

According to some embodiments, user validation request message **110** may be an electronic message associated with a user mobile device **183,** comprising some of the following: a user mobile device **183** identifier (comprising a unique identifier, phone number, the incumbent client application **250** first identifier (**FIG.2A**), as examples), identification information of a user mobile device **183** account, validation time, address of a location, geo-location data, host **105** descriptive information - comprising the Host Identification Number (HID) of the host **105,** Terminal Identification Number (TID) of an access device **185** activating an operation, information of a facilitator **103** issued host **105** account ("host **105** account"), for a user validation process - and any other information that may be utilized in determining to identify, whether to authorize an operation.

Proximity data - pertaining to a plurality of locations of hosts **105** where access devices **185** are operated, user mobile devices **183** and computing devices **189** - may comprise longitude and latitude coordinates, or an identifiable location such as a city, postal code, street address, flat unit in a building, name of a venue, or any other information suitable to identify a distinctive location. In another embodiment, proximity data encompasses a venue AP list **500** (as shown in **FIG.5A**) of network **109** linked APs **107** available for communicative linkage with a user mobile device **183** or computing device **189** through short-range wireless pairing at the present location. In a further embodiment, proximity data is a proximity log, which will be discussed further below.

AP **107** (equipped in access device **185,** or disposed in a venue, as examples) - such as beacon, gateway, WiFi router - may comprise a reader, with a unique identifier, and capability to provide short-range wireless pairing with user mobile device **183** or computing device **189,** and transport of information to network **109.** In indoor positioning systems based on APs, tracking system **130** obtains the user position and projected duration by allocating the memory **135** stored incumbent AP **107** identifier or characteristics tagged geo-location.

Ascertainer **108** comprises an approval processor **121** (a processor mounted network linked application server or control system, as an example), data storage medium **122,** and tracking system **130.** Approval processor **121,** comprising one or more modules (not shown), processor mounted servers, functioning with combinations of hardware or software components to record, change, update, send, receive or erase data and information stored in the operatively coupled data storage medium **122.** The one or more modules may be programmed or configured to maintain and update a data storage medium **122** stored client device IP database **10.1,** and location database **10.2.**

Although **FIG.1** illustrates the data storage medium **122** as a single entity, the invention is not so limited. For example, some data pertaining to the client device IP database **10.1** can be stored in the memory of a user mobile device **183** (as discussed further below).

In one embodiment of the subject invention, network **109** linked tracking system **130** includes application server **134** - comprising multiple computers or processor mounted application servers, and memory **135.** Tracking system **130** operates with a plurality of user mobile devices **183** and computing devices **189,** network **109** linked APs **107,** access devices **185** processing mobile devices **183** account pertinent operations, and the geo-location system **133,** to track and record the geo-location of user mobile devices **183** with respect to time.

Geo-location system **133** is a terrestrial or satellite based Global Navigation Satellite System (GNSS), including the Beidou Navigation ***System,*** Differential GPS (DGPS), Eurofix (RTM) DGPS, Global Positioning System (GPS). In other trilateration based positioning systems, geo-location system **133** comprises systems providing reference points, or cellular communication towers, transmitting RF signals received by user mobile device **183.**

Application server **134** may be any processor mounted and software imbedded equipment capable of facilitating two-way data communications with multiple user mobile devices **183** and computing devices **189** - and in a further embodiment, access devices **185** - through network **109;** application server **134** is configured to receive via the network **109** and record in memory **135** for ascertainer **108** information including identifier pertinent proximity data from a host **105,** user mobile device **183,** access device **185,** and computing device **189,** and, user mobile devices **183** or computing devices **189** mobility data. In another embodiment, application server **134** determines the geo-location of a user mobile device **183,** or computing device **189,** by matching the unique identifier of host **105** installed AP **107** - comprised in the records ("pairing record") encompassing short-range wireless "pairing" and "unpairing" (using Bluetooth™, WiFi, as examples) with AP **107** sent by the communicatively paired user mobile device **183** or computing device **189** - with the location database **10.2** stored AP **107** identifier pertinent geo-location. In one embodiment, a user mobile device **183** imbedded client application **250** (as shown in **FIG.2A**) shares the incumbent proximity data with a software program running in the application server **134** that logs and interprets the proximity data (as described in more detail below).

A library of predefined geo-fence boundaries, the polling interval at constant or variable frequency directing data logging between application server **134** and user mobile device **183,** or computing device **189,** quantitative calculations performed by application server **134,** and other information such as personal data of the user of user mobile device **183** or computing device **189,** is stored in the memory **135** and retrieved by the application server **134.**

Data storage medium **122,** working with or within the communicatively coupled approval processor **121,** can be any device, including magnetic, optical or solid-state memory; where stored information can be changed by the approval processor **121,** or application server **134.** Data storage medium **122,** storing instructions and coding, when executed by the one or more processors of the approval processor **121,** are configured to cause the one or more processors to execute methods discussed in conjunction with **FIGs.3-8.**

Network **109** can include the Internet in addition to local area networks (LANs), wide area networks (WANs), direct linkages, such as through a universal serial bus (USB) port, other forms of computer-readable media, or any combination thereof. On an interlinked set of LANs, including those based on differing architectures and protocols, a router acts as a link between LANs, enabling messages to be sent from one to another: communication links within LANs typically include twisted wire pair or coaxial cable; communication links between networks may utilize analog telephone lines, full or fractional dedicated digital lines including T1, T2, T3, and T4, Integrated Services Digital Networks (ISDNs), Digital Subscriber Lines (DSLs), wireless links including satellite links, or other communications links known to those skilled in the art. Network **109** is enabled to employ any form of computer-readable media for communicating information from one electronic device to another, configured to couple various user mobile devices **183** and computing devices **189** and with each other though wireless linkage. In essence, network **109** includes any communication method by which information may be transported between one device to another, and transports information to and from one or more other networks; remote computers and other related electronic devices could be remotely linked to either LANs or WANs via a modem and temporary telephone link.

In an indoor tracking environment, the network **109** wireless and landline communication infrastructure typically includes a combination of Ethernet and WLAN. User mobile device **183** and computing device **189** possessing short-range wireless communicative components and functionality are continually tracked through an AP **107** node based mesh network (not shown) comprising a plurality of short-range wireless APs **107,** which transmit signals to a user mobile device **183** or computing device **189,** and transport the returning signals to the application server **134.** Whereas, in an outdoor environment, network **109** includes a combination of wireless and landline communication infrastructure such as a cellular telecommunication system and the Internet.

User mobile device **183** is a processor and memory mounted device used in digital cellular systems possessing radio frequency (RF) based systems (802.11 based wireless communication, Bluetooth™, NFC, WiMAX, Zigbee, WiFi), short-range wireless, wireless telematics communications functionality ("telematics functionality"), capable to send, request and receive data over network **109** - which can be a personal digital assistant (PDA), cellular phone or smart phone such as a Blackberry®, an Android® device, or an I-Phone®, operative with subscriber based wireless data communication networks such as the 3G network or 4G network, code division multiple access (CDMA), EvDO, EDGE network, enhanced specialized mobile radios (ESMRs), personal communications systems (PCS), or any combination thereof; it displays graphical user interfaces and is able to activate a client application **250** possessing functionality as a web browser, through which a user can implement the subject matter of performing a user validation process pertinent operation.

User mobile device **183** is also configured to obtain and record the present proximity data by receiving and processing geo-location system **133** sent signals with imbedded hardware or software components, or a combination of both; some exemplary technology may include the GPS, etc. In a further embodiment, user mobile device **183** determines its geo-location by engaging in the trilateration process, and transmits coded wireless messages - comprising the unique identifier, and present geo-location, or, geo-fence centric projected lead time from a location (as discussed further below) - at constant or variable specific frequency in time as per the preconfigured periodic or intermittent polling interval in operative settings to the application server **134;** alternatively, user mobile device **183** transmits the coded wireless messages standalone or at a defined polling interval in accordance with received application server **134** sent standalone or periodic probe requests.

Computing device **189** is a processor and memory mounted device possessing short-range wireless, radio frequency (RF) based systems (Bluetooth™, NFC, WiMAX, Zigbee, WiFi or 802.11 based wireless communication), without telematics functionality, such as an I-Pad®. Typically, user mobile device **183** and computing device **189** are configured to generate with respect to time and record pairing records with an AP **107,** and configured with operating parameters to generate and transmit coded wireless messages comprising the concurrent proximity data or the unique identifiers of the APs **107** - at constant or variable specific frequency in time as per the preconfigured polling interval, or upon detection of pairing - to the tracking system **130** at any given time. Application server **134** may also be configured to generate and record pairing records in memory **135.**

User mobile device **183** and computing device **189** may be configured to communicate messages, through a protocol and without limit to such: email, Jabber, Internet relay chat (IRC), instant messaging (IM), Multimedia Message Service (MMS), Short Message Service (SMS), between each other, another device, or the like. User mobile device **183** and computing device **189** may further be configured to include a software application to receive, send messages as mentioned above, to receive text messages and to display the message encompassed information, or include a client application **250** that is configured to provide information that identifies itself, including a capability, identifier, IP address, name, type, linked AP **107** IP address, and the like.

Consider now a communication device **230** as depicted in **FIG.2A** in conjunction with **FIGs. 1, 2B,** and **2C.** Communication device **230,** imbedded with the aforementioned client application **250,** comprising: controller **240** with telematics functionality as user mobile device **183;** or, controller **240.8** without telematics functionality as computing device **183.**

In one embodiment, client application **250** includes multiple functionality features, web browser, text and voice communication channel, as examples, and is capable of exporting to ascertainer **108** obtained and stored mobility data - comprising web browsing history pertaining to web pages browsed with the client application **250,** or other installed web browsers - and proximity data. Client application **250** is also configured to extract information imported through the importer **253** for storage in the communication device **230** memory.

As used herein, client application **250** includes program modules, applications, programs, mobile apps, software, firmware, operating system coding, methods, routines, etc., and can also include a client portion of a program application that works in connection with communication device **230** and application server **134,** and is not limited to a stand-alone application that runs autonomously on a communication device **230** as client, but rather refers to application on a communication device **230** that communicates with a corresponding server application hosted by application server **134.**

Client application **250** interacts, according to some variation of a client-server relationship, with the ascertainer **108** to provide application services, access to web browsing history of other web browsers imbedded in a communication device **230,** access to web content, and the like. In various embodiments, ascertainer **108** registers and invokes the communication device **230** through communicating with the imbedded client application **250.**

Client application **250** can communicate with the ascertainer **108** to manage registration of a new client application **250,** and is capable of determining, recording application characteristics corresponding to the communication device **230.** In operation, for example, when ascertainer **108** detects an installation of a new client application **250** in a communication device **230,** ascertainer **108** invokes the installed client application **250** to determine the characteristics thereof. These characteristics, such as proximity data pertaining to the communication device **230** (as discussed further below), user password, along with a first identifier of the client application **250** are stored in the memory **242** of controller **240,** or memory **242.8** of controller **240.8,** until they can be provided to the ascertainer **108.**

If a complete configuration is specified, a first client application **250** is installed and configured on a communication device **230.** For example, a web browser as the client application **250,** can be installed in the communication device **230** and configured with a profile in accordance with the user or user mobile device **183** account information. Conversely, if a basic configuration is specified, then the client application **250** determines if a supported client application **250** is already installed in the communication device **230.** If a supported client application **250** is installed, then the client application **250** imbedded communication device **230** automatically configures the supported client application **250.** For example, client application **250** may specify a plurality of supported client applications **250,** such as other apps, web browsers, or the same client application **250** installed during a complete configuration.

If a supported client application **250** is not installed, the client application **250** imbedded communication device **230** executes a secondary configuration process. In some implementations, the secondary configuration process provides user instructions to configure a plurality of second client applications **250.** For example, a secondary configuration process can provide user instructions for configuring a POP3 mail account, or configuring one of a plurality of freely available web browsers. In some implementations, the secondary configuration process can be an installation of the client application **250** that is installed in the complete configuration. The installation can, for example, be subject to an approval by the ascertainer **108,** as such installation may incur a per seat license fee.

If unauthenticated response data is received at the communication device **230,** then the communication device **230** precludes a configuration of a client application **250;** for example, displays a notice indicating that the identification data for the user was not authenticated, or that the user was authenticated but is not authorized to have the client application **250** installed or have a pre-existing client application **250** configured.

Components encompassed in the client application **250,** comprising:

1. history recorder **251** - structured to record web browsing history with respect to time in the communication device **230** memory (controller **240** memory **242,** or controller **240.8** memory **242.8**), for each of a sequence of web pages browsed by the client application **250** as web browser, and other web browsers imbedded in the communication device **230;**
2. client manager **252** - configured to export through the exporter **254** the stored web browsing history and communication device **230** memory stored information to another communicatively linked device, and import through the importer **253** information including ascertainer **108** sent messages;
3. importer **253** - for importing web browsing history with respect to time each of a sequence of web pages browsed by other communication device **230** imbedded web browsers; and, messages sent by ascertainer **108,** or another communicatively linked communication device **230;**
4. exporter **254** - for exporting data and information to the ascertainer **108,** comprising information pertaining to communication device **230** and client application **250,** web browsing history of the client application **250** as a web browser, and other communication device **230** imbedded web browsers.

In an alternative embodiment, client application **250** is a web based service; once activated, a web page provides those functions of the client application **250** (as mentioned above). In general, client application **250** can be any software, program, application, app imbedded in any processor mounted communication device **230** having a graphical user interface, or a web based URL (as discussed further below) executing the aforementioned functionality when visited by the communication device **230** (such as the user mobile device **183** or computing device **189**) via the Internet.

With reference to **FIG.2B,** controller **240** - possessing short-range wireless linkage capability with telematics functionality - comprises processor **241,** memory **242,** network interface **243,** display & input/output ("I/O") **244,** geo-receiver **245** and wireless data network device **246.** Processor **241** is communicatively coupled to a computer-readable storage medium memory **242.** Memory **242** may have stored thereon one or more executable programs of instructions that, when executed by the processor **241,** performs at least some of the operations of the controller **240,** history recorder **251,** as well client manager **252.** Network interface **243** may include its own memory storing its identifier, and a transceiver to exchange network communications utilizing a short-range wireless protocol such as ultrawideband (UWB), Bluetooth™, IEEE 802.15 or IEEE 802.11. Geo-receiver **245** receives geo-location system **133** (**FIG.1**) signals that are processed by the processor **241** for obtainment of geo-location data **336** (**FIG.3**). Wireless data network device **246** - sometimes known as a transceiver, transceiving device, or network interface card (NIC) - includes circuitry for coupling communication device **230** to one or more networks, and is constructed for use with one or more communication protocols and technologies including, not limited to CDMA, general packet radio service (GPRS), global system for mobile communication (GSM), time division multiple access (TDMA), transmission control protocol/Internet protocol (TCP/IP), user datagram protocol (UDP), SIP/RTP, SMS, ultra wide band (UWB), WAP, IEEE 802.16 Worldwide Interoperability for Microwave Access (WiMax), or any of a variety of other wireless communication protocols.

In **FIG.2C,** controller **240.8** - with short-range wireless linkage capability, without telematics functionality - comprises components akin to those of controller **240** in **FIG.2B,** comprising: processor **241.8,** memory **242.8,** network interface **243.8,** display & I/O **244.8.**

**FIG.3** depicts a communication system operation in an environment **300** in conjunction with **FIGs. 1-2C,** according to an exemplary embodiment. AP **107** with identifier **312** 00:14:78:EE:19:F8 - communicatively linked to the network **109** - relays different networks and sets a route as a router (in compliance with wireless protocol IEEE 802.11, as an example) to provide communication within at least one sub-network between one or more user mobile devices **183** and computing devices **189** through a short-range wireless linkage **319,** and access to network **109** (such as the Internet, as an example) via a data exchanger such as a DSL modem by using IP addresses **311** in allocation in one example: WAN IP 160.13.19.17 for the network **109,** LAN IP 192.160.0.1 for the linkage **319,** and the linked devices IP addresses **313** (respectively 192.168.0.103, 192.168.0.109) to user mobile device **183** and computing device **189.** AP **107** may uniquely identify itself through any of an identifier that includes a code, device identifier, MAC address, or password.

Short-range wireless linkage **319** is a wireless communicative channel between user mobile device **183** and computing device **189,** via AP **107,** to link to network **109** and any processor mounted communication device, receiving, storing and sending information, using any of a variety of application layer protocols of the OSI layered protocol, including but not limited to HTTP, SMTP, RTP/SIP, FTP, or the like, as well as using a variety of transport layer protocols of the OSI layered protocol, for example, including but not limited to, Stream Control Transmission Protocol (SCTP), Transmission Control Protocol (TCP), User Datagram Protocol (UDP), or the like. Linkage **319** may, for example, comprise radio links implemented using a protocol such as IEEE 802.11.

User mobile device **183** with identifier **332** 00:0F:66:0C:64:40 obtains an AP **107** allocated subnet IP address **331** 192.168.0.103, and communicatively links with network **109** through linkage **319;** user mobile device **183** proximity data comprises: subnet IP address **331,** AP IP addresses **333** (IP addresses **311**), AP identifier **334** (identifier **312**), communicatively linked AP linked devices IP address and identifier **335** 192.168.0.109 and bc50b27a, and geo-location data **336;** whereas, proximity log **337** is "proximate", indicating user mobile device **183** is communicatively paired with AP **107.**

Computing device **189** with identifier **392** bc50b27a obtains an AP **107** allocated subnet IP address **391** 192.168.0.109, and communicatively links with network **109** through linkage **319;** computing device **189** proximity data comprises: subnet IP address **391,** AP IP addresses **393** (IP addresses **311**), AP identifier **394** (identifier **312**), communicatively linked AP linked devices IP address and identifier **395** 192.168.0.103 and 00:0F:66:0C:64:40; whereas, proximity log **396** is "proximate", indicating computing device **189** is communicatively paired with AP **107.**

The unique identifier identifies a device in distinction, including AP **107,** user mobile device **183,** and computing device **189,** through an imbedded client application **250,** user password, user characteristics, MAC address, or any number comprising digits and letters combining one or more of the preceding identifiers thereof. User mobile device **183** may include additional information in the unique identifier, comprising the phone number, Mobile Identification Number (MIN), and other mobile device identifier. The unique identifier may be included in a message and sent by a user mobile device **183,** computing device **189,** to the ascertainer **108,** other communication devices **230,** or the like.

**FIG.4A** depicts in conjunction with **FIGs. 1, 2B, 3,** ascertainer **108** registers user mobile device **183** (comprising controller **240**), with authorized user of an account (membership account issued by facilitator **103** as membership club, or payment network pertinent credit card issued by issuer **104** as bank, as examples), with number of the user mobile device **183** account or safe account info (table 1). Ascertainer **108** acknowledges user mobile device **183** as environment **300** venue related in an exemplary embodiment, in accordance with an ascertainer **108** recorded data storage medium **122** stored venue relationship centric database **400,** and, computing device **189** (comprising controller **240.8,** without telematics functionality) as peering related to user mobile device **183,** comprising:

proximity time span **401:** commencing on 2015-12-1, ending on 2015-12-14;

pairing span **402:** identifier **332** 00:0F:66:0C:64:40 pertinent user mobile device **183** regularly paired with environment **300** venue related disposed AP **107,** with identifier **312** 00:14:78:EE:19:F8, beyond a second threshold (10 pairing numerations and 50 hours of pairing during a fortnight, as an example) - ascertainer **108** obtains pairing span **402** data transported by AP **107** or user mobile device **183;** identifier **392** bc50b27a pertinent computing device **189** regularly paired with environment **300** venue related disposed AP **107,** with identifier **312** 00:14:78:EE: 19:F8, beyond the second threshold - ascertainer **108** obtains pairing span **402** data transported by AP **107,** or computing device **189;**

location **403:** coordinates in user mobile device **183** sent geo-location data **336** - attributing to difference in distance from an ascertainer **108** recorded address or venue (not shown) of user mobile device **183** within a proximity threshold;

status **404:** "related" indicating ascertainer **108** acknowledges user mobile device **183** as environment **300** venue related, and permits to undertake user mobile device **183** account information base user validation process;

peering status **405:** "related" indicating ascertainer **108** acknowledges computing device **189** as environment **300** venue related, peering related to user mobile device **183,** and permits to undertake user mobile device **183** account information base user validation process.

**FIG.4B** depicts in conjunction with **FIGs. 1, 2C-4A,** an exemplary embodiment of an ascertainer **108** acknowledging a device as user mobile device **183** peering related in peering relationship centric client device IP database **10.1** stored in data storage medium **122** database **410,** comprising:

primary device identifier **411.1:** ascertainer **108** acknowledged venue related device identifier - for example, identifier **332** 00:0F:66:0C:64:40 of environment **300** venue related user mobile device **183;** there may be a plurality of primary devices identifiers **411.1.n** of venue related user mobile devices **183;**
secondary device identifier **411.2:** ascertainer **108** acknowledged primary device peering related device identifier - for example, identifier **392** bc50b27a of environment **300** venue related user mobile device **183** peering related computing device **189;** there may be a plurality of secondary devices identifiers **411.2.n** of venue related computing devices **189;**
status **412.1:** "related" indicating primary device identifier **411.1** pertinent device is ascertainer **108** acknowledged as venue related to an environment;
status **412.2:** "related" indicating secondary device identifier **411.2** pertinent device is ascertainer **108** acknowledged as venue related to the environment;
AP identifier **413:** ascertainer **108** acknowledged environment venue related AP identifier - for example, identifier **334** 00:14:78:EE: 19:F8 of the venue related environment **300** disposed AP **107;**
location **414:** an environment being venue related to primary device identifier **411.1** pertinent device and secondary device identifier **411.2** pertinent device - for example, environment **300** at a geo-location with coordinates 44.09, 0.02;
peering status **415:** "related" indicating secondary device identifier **411.2** pertinent device is ascertainer **108** acknowledged as peering related to the primary device identifier **411.1** pertinent device, and permitted to undertake an operation of an account of a primary device identifier **411.1** pertinent device;
IP address **416:** effective secondary device identifier **411.2** pertinent device IP address (192.168.0.109 of computing device **189,** as an example).

**FIG.4C** depicts in conjunction with **FIGs. 1, 2A, 3, 5A,** an exemplary embodiment of an ascertainer **108** recorded data storage medium **122** stored host proximity data storage structure **420** of location database **10.2,** comprising:

1. effective proximity data of tracked user mobile devices **183;**
2. effective proximity data and most up-to-date descriptive information of a plurality of hosts **105** with different physical locations.

Location database **10.2** may be configured to store some or all proximity data associated with various hosts **105,** data identifying hosts **105** operated incumbent user validation process pertinent access devices **185,** comprising:

location name **421:** consisting of the name or other identifier (e.g. ***Y6NN22C***) of a host **105** location operating the access device **185;**
geo-location **422:** (e.g. GPS coordinates 48, 0.2), or any other information suitable to identify the location of host **105** operating the access device **185** including an address, city, state, postal code (such as a ZIP™ code), country;
HID 423: host identifier (e.g. 0121), or a Host Category Code ("HCC") for a host 105 associated with the access device 185;
TID **424:** unique identifier (e.g. 0025) associated with the access device **185** assigned by the corresponding manufacture, or any other party;
location access device properties **425:** properties or description of protocols, technologies, manufacturer, of the access device(s) **185** located at a host **105;**
location based validation status **426:** indicating whether or not a user validation process may be performed in accordance with a host **105** location;
institute identifier **427:** unique identifier (e.g. 460999) of an issuer **104,** or, facilitator **103** associated with host **105** operating the access device **185;**
location description **428:** comprising a text string description (e.g. Aberdeen Mall, Richmond, Canada) of a location associated with the access device **185;**
other location properties **429:** including any information associated with the location not previously mentioned, as an example, a network identifier **501** "NET GEAR80EE" indicating an available on-site AP **107** providing network linkage, including the Internet, through short-range wireless pairing.

In some instances, location database **10.2** may be queried directly by the consumers by entering information, such as, name of the location, longitude and latitude coordinates, a zip code or address (e.g., entering data into a web browser or client application **250**), or the data could be automatically generated by an integrated location detector (e.g., a GPS program on a mobile device or through use of an IP address). The consumer's current location can then be compared against in the location database **10.2** stored location data, and enable consumers to identify location based user validation process abled access devices **185** and the corresponding hosts **105.**

In some embodiments, to enable customers with user mobile devices **183** and computing devices **189** to find nearby locations where user validation process associated access devices **185** are provided, system and methods may be provided to enable facilitators **103,** issuers **104,** hosts **105,** to use a generic locator capable to upload locations, or any other desired mobility data or proximity data into the location database **10.2,** as examples, including but are not limited to:

facilitators **103** pertinent hosts **105:** restaurants, stores and shops;
issuers **104** pertinent hosts **105:** ATM (automatic teller machine) locations, bank locations, prepaid payment device purchase locations, houses, apartments and commercial buildings, hotels and lodging facilities, and automobiles.

**FIG.5A** depicts in conjunction with **FIG. 3,** venue AP list **500** comprising network identifier **501** "NET GEAR80EE", and network identifier **502** "NET GEAR90EE", pertaining to environment **300** installed APs **107** available for providing pairing for one or more user mobiles devices **183** or computing devices **189** to access network **109** via short-range wireless linkage **319.**

With reference to **FIG.5B** in conjunction with **FIGs. 2A-2C,** consider user mobile device **183** enacted web browsing history **510** of browsed web pages is stored in the communication device **230** memory - controller **240** memory **242,** or controller **240.8** memory **242.8;** each element of the web browsing history **510** may be a data structure having individual fields **511-516,** comprising:

- thumbnail image **511** for the browsed web page;
- group **512** with which the web page is associated;
- universal resource indicator ("URI") **513** of the browsed web page;
- date and time **514** at which the browsing of the web page occurred;
- preceding web page **515** browsed or accessed immediately prior to the web page corresponding to web browsing history **510** by a web browser;
- subsequent web page **516** browsed or accessed immediately after the web page corresponding to the web browsing history **510** by a web browser; wherein the web browsing history **510** corresponds to the most recently browsed web page, the subsequent web page **516** may be null.

A "Universal Resource Indicator" (URI) is the generic name for a "Uniform Resource Locator" (URL) or a "Uniform Resource Name" (URN). In furtherance, a preceding web page **515** and subsequent web page **516** fields may be pointers to other web browsing history **510** elements which correspond to the preceding web page **515** and subsequent web page **516.**

Referring to **FIG.5C** in conjunction with **FIGs. 1-2C,** mobile devices **183** is configured to obtain geo-location data positions $d_1$-$d_5$ on the basis of location signals received from geo-location system **133;** tracking system **130** receives user mobile device **183** (comprising controller **240**) sent proximity data, positions $d_1$-$d_5$ and venue AP lists $l_1$-$l_5$ recorded at instantaneous times $t_1$-$t_5$, attributes to a time based user blockchains path **520,** comprising:

[Table 2: user mobile device **183** pertinent proximity data]

| Instantaneous time $t_n$ | Position $d_n$ | (GPS coordinates) | venue AP list $l_n$ |
|---|---|---|---|
| $t_1$ at 9:00.00 | $d_1$ | 45,0 | $l_1$ |
| $t_2$ at 10:00.00 | $d_2$ | 44.08, 0.02 | $l_2$ |
| $t_3$ at 11:00.00 | $d_3$ | 44.06, 0.03 | $l_3$ |
| $t_4$ at 12:00.00 | $d_4$ | 44.04, 0.07 | $l_4$ |
| $t_5$ at 13:00.00 | $d_5$ | 44.02, 0.08 | $l_5$ |

On the other hand, user blockchains path **520** of a computing device **189** (comprising controller **240.8)** includes a venue AP list comprising $l_n$, recorded with respect to instantaneous time $t_n$, yet excluding the positions $d_n$.

The user blockchains path **520** pertinent proximity data - positions $d_n$, venue AP lists $l_n$, recorded at instantaneous times $t_n$ by user mobile device **183** - is stored in the controller **240** memory **242** (operating as data storage medium **122**), and sent to ascertainer **108** in accordance with preconfigured operating parameters, or, as response information to ascertainer **108** prompted requests. Ascertainer **108** stores the user blockchains path **520** in memory **135** of the tracking system **130,** or data storage medium **122** - which is a memory entity other than the user mobile device **183** controller **240** memory **242.**

In an exemplary user validation process, a host **105** pertinent user validation request message **110** encompassing validation time $t_v$ "11:30a.m." and a concurrent position $d_v$ is received by ascertainer **108,** which ascertains the validation velocity $v_v$ with a proximity threshold, by extrapolating position $d_3$ - the most recently obtained user mobile device **183** pertinent user blockchains path **520** - in accordance with an average traversal velocity v, comprising:

$$v = \frac{(d_3 - d_1)}{(t_3 - t_1)} \quad [1]$$

substituting the change from position $d_3$ to position $d_v$, over the lead time period $\Delta t_l$ (comprising the time difference between $t_3$ and $t_v$) with equation [1], position $d_v$ is within a proximity threshold: ascertainer **108** concludes that position $d_v$ conforms with user blockchains path **520** in a change of location from position $d_3$ to the validation time $t_v$ pertinent position $d_v$ with respect to the lead time period $\Delta t_1$: ascertainer **108** deems the validation request message **110** pertinent user validation process "valid" (as discussed further below).

**FIG.6A** illustrates a setting **600** in conjunction with **FIGs. 1, 2A, 3, 4B** which is not in accordance with all features of the invention: ascertainer **108** is configured to acknowledge and record venue related user mobile device **183** and peering related computing device **189** in the client device IP database **10.1.** Computing device **189** displays a client application **250** generated quick response (QR) code **616** - comprising information such as identifier **392** bc50b27a or other identifying code as an example. In one example, ascertainer **108** ascertains computing device **189** as peering related to a client application **250** imbedded user mobile device **183,** comprising:

user mobile device **183** capturing QR code **616;**
user mobile device **183** localizing an area of the QR code **616** by combining criteria determination to identify the QR code **616,** where the criteria comprise pixel dynamic scale (DS), black-cell ratio (BR), and
edge intensity sum (EIS) -performed by user mobile device **183** or ascertainer **108.**

Ascertainer **108** records the user mobile device **183** sent QR code **616,** acknowledging computing device **189** as peering related to user mobile device **183,** is permitted to process online user validation process comprising user mobile device **183** account information. In another embodiment, user mobile device **183** displays a client application **250** generated payment QR **617** and string code **618** - which will be discussed below.

Similarly in a further example not according to the invention, a printed QR code (not shown) comprising an identification means **684** unique identifier can be scanned by the user mobile device **183,** for sending to ascertainer **108,** which acknowledges and records the identification means **684** as peering related to the user mobile device **183** in a database; wherein computing device **189** is permitted to process online user validation process comprising user mobile device **183** account information, providing that the computing device **189** and identification means **684** are within a distance that does not exceed the proximity threshold.

**FIG.6B** illustrates a website **650** in conjunction with **FIG. 6A** pertaining to an online store merchant **105** - which will be discussed below.

**FIG.6C** depicts a communications group **680** for online fiscal transfer - which will be discussed below.

**FIG.7** presents a flow diagram of an online user validation process **700** in conjunction with **FIGs. 2A-2C, 3, 4B, 5B, 6A,** and **6B,** which is in accordance with the invention. Processing logic resides in a few entities and apparatuses as discussed hereinafter.

At block **701,** user mobile device **183** (comprising controller **240,** with telematics functionality) is communicatively linked with network **109;** computing device **189** (comprising controller **240.8,** without telematics functionality) is communicatively linked with network **109** by obtaining an IP address allocated by a communicatively paired AP **107** via short-range wireless linkage **319.**

At block **702,** ascertainer **108** receives an issuer **104** issued user mobile device **183** account (payment card, credit card, issued by a bank or financial institute, as examples) and merchant **105** pertinent user validation request message **110** - generated and sent by any one of merchant **105** pertinent acquirer **103,** issuer **104,** merchant **105,** a user mobile device **183** account pertinent payment network (not shown), or client application **250** upon detecting entry of user mobile device **183** account information - comprising selected information of the acquirer **103** issued merchant **105** account, name and identifier of issuer **104,** and user mobile device **183** account, or, safe account info (table 1) of user mobile device **183** account. Ascertainer **108** acknowledges the user validation request message **110** as request for verification of relevance of a validation time $t_v$ based merchant **105** pivotal online operation ("online operation") to the user mobile device **183** account, and performs the online user validation process.

At block **703,** ascertainer **108** seeks the effective computing device **189** IP address **416** from the data storage medium **122** stored client device IP database **10.1 -** in one embodiment, computing device **189** imbedded client application **250** exports through exporter **254** to ascertainer **108** the proximity data, comprising computing device **189** pertinent secondary device identifier **411.2** and IP address **416** upon detecting entry of selected information of the user mobile device **183** account in a browsed website **650;** in another embodiment, user mobile device **183** imbedded client application **250** obtains and sends to ascertainer **108** secondary device identifier **411.2** and IP address **416** of computing device **189** upon detecting computing device **189** through short-range wireless linkage **319.**

At block **704,** ascertainer **108** successfully obtains the effective IP address **416** from client device IP database **10.1,** and requests mobility data from computing device **189** in an ascertainment request message **641** sent through network **109.** In response to ascertainment request message **641** imported by importer **253** of the imbedded client application **250,** computing device **189** sends through network **109** to ascertainer **108** a response message **642** - comprising client manager **252** retrieved time based computing device **189** web browsing history **510** recorded with respect to time in the controller **240.8** memory **242.8** within a time period encompassing the validation time $t_v$.

Alternatively at block **705,** ascertainer **108** fails to obtain the effective IP address **416,** and requests mobility data from user mobile device **183** in an ascertainment request message **641** sent through network **109.** In response to ascertainment request message **641,** user mobile device **183** sends through network **109** to ascertainer **108** a response message **642** - comprising client manager **252** retrieved time based user mobile device **183** web browsing history **510** recorded with respect to time in the controller **240** memory **242** within a time period, and recorded at a time having a smallest difference with the validation time $t_v$ or validation time $t_v$.

At block **706,** ascertainer **108** performs the user validation process by validating the relevance of the user validation request message **110** pertinent online operation entailed web portal to response message **642** encompassed web browsing history **510.**

At block **707,** as acknowledgment of relevance of the online operation to user mobile device **183** account, ascertainer **108** concludes the user validation process with a status indicator "valid", comprising: response message **642** encompassed web browsing history **510** demonstrating relevance - URI **513** recorded at date and time **514** encompassing the validation time $t_v$, at which the browsed one or more of the web pages include the online store merchant **105** website **650** as entailed to perform the user validation request message **110** pertinent online operation.

In contrary at block **708,** ascertainer **108** concludes the online user validation process with a status indicator "invalid", comprising:

URI **513** recorded at date and time **514** encompassing the validation time $t_v$, at which the browsed one or more of the web pages are not relevant to the user validation request message **110** pertinent online operation; or,
response message **642** is not received by ascertainer **108.**

At block **709,** ascertainer **108** sends through network **109** an outcome message **643** - encompassing a status indicator "valid", or, a status indicator "invalid", to receiving nodes, comprising one or more of the following:

acquirer **103;**
issuer **104;**
merchant **105;**
user mobile device **183;**
user mobile device **183** account pertinent payment network ("payment network") clearing and settlement services payment authorization services (such as the MasterCard® payment card system interchange network, and VisaNet™).

The receiving nodes pertaining to acquirer **103,** issuer **104,** merchant **105,** payment network, may comprise code driven processor and memory mounted application server or control system, as examples. As an option, outcome message **643** may include an alert with a status indicator "invalid".

The online operation may comprise any fiscal transaction entailing transfer of amount of settlement from a user mobile device **183** bank account, or a user mobile device **183** account pertaining to issuer **104** and payment network, to a merchant **105** account through a web portal.

**FIG.8** presents a flow diagram of a user validation process **800** which is not in accordance with all features of the invention in conjunction with **FIGs. 2A-3, 4C, 5A,** and **6A.** Processing logic resides in a few entities and apparatuses as discussed hereinafter.

Process **800** commences at block 1: ascertainer **108** associates a user mobile device **183** (comprising controller **240**) and an issuer **104** issued account through recordation of a user mobile device **183** identifier and user mobile device **183** account pertinent safe account info (table 1). In oneexample, a venue AP list **500** - comprising network identifiers **501** "NET GEAR80EE", **502** "NET GEAR90EE", pertaining to host **105** pertinent environment **600** installed Aps **107** available for providing pairing through short-range wireless linkage **319** and access to network **109** - is captured and sent, at frequency and time intervals in accordance with preset operating parameters, by one or more of the Aps **107;** or, captured and sent by an environment **600** located AP **107** equipped access device **185,** or host **105** pertinent computing device **189.** Ascertainer **108** receives and stores the venue AP list **500** as *venue reference profile* in the data storage medium **122.**

At block **2,** ascertainer **108** receives an issuer **104** issued user mobile device **183** account (payment card, credit card, issued by a bank or financial institute, as examples) and host **105** pertinent user validation request message **110** - generated and sent by any one of host **105** pertinent facilitator **103,** issuer **104,** host **105** pertinent access device **185,** or a user mobile device **183** account pertinent payment network (not shown) - comprising selected information of the location database **10.2,** facilitator **103** issued host **105** account, name and identifier of issuer **104,** and user mobile device **183** account. Alternatively, host **105** pertinent access device **185** is configured to obtain and include in user validation request message **110** or in a separate message, at the validation time $t_v$ of processing a user mobile device **183** account pertinent operation, number of the user mobile device **183** account number or safe account info (table 1), as an example) and "access device **185** proximity data", comprising: present geo-location data ("transaction location") calculated on the basis of geo-location system **133** sent signals; or, present venue AP list **500;** or, identifier **501** "NET GEAR80EE" pertaining to access device **185** equipped AP **107.**

At block **3,** ascertainer **108** acknowledges the user validation request message **110** as request for validation of relevance of a validation time $t_v$ based host **105** pivotal access device **185** operation ("transaction") to the user mobile device **183** account. Ascertainer **108** requests "proximity data" from user mobile device **183** via an ascertainment request message **641** sent through network **109,** comprising any one or combination of: the present geographic location of the mobile device, one or more geographic locations of the controller **240** memory **242** stored user blockchains path **520,** a present venue AP list **500** of detected short-range wireless Aps **107** available for communicative linkage to the mobile device, and proximity log **337.** In one example, ascertainer **108** includes user mobile device **183** proximity data in ascertainment request message **641** sent through network **109** to access device **185.** Alternatively, ascertainer **108** includes access device **185** proximity data in ascertainment request message **641** sent through network **109** to user mobile device **183.**

In one example, in response to ascertainment request message **641,** user mobile device **183** sends through network **109** to ascertainer **108** a response message **642** encompassing the proximity data, comprising:

present venue AP list **500** obtained by the imbedded client application **250;**
selected positions $d_n$ of the user blockchains path **520** recorded with respect to time in controller **240** memory **242** within a time period, and recorded at a time having a smallest difference with the validation time $t_v$ or validation time $t_v$.

Alternatively, user mobile device **183** retrieves the controller **240** memory **242** stored proximity data for validating the relevance to the access device **185** proximity data in accordance with the user validation process.

At block **4,** either ascertainer **108,** or user mobile device **183,** or access device **185,** performs the user validation process by validating the relevance of the user mobile device **183** proximity data to access device **185** proximity data, comprising:

validating the relevance of the access device **185** proximity data comprised venue AP list **500** to the user mobile device **183** obtained present venue AP list **500;** or,
validating the relevance of the access device **185** proximity data comprised identifier **501** "NET_GEAR80EE" pertaining to access device **185** equipped AP **107,** or another AP identifier **502** "NET GEAR90EE", to the user mobile device **183** obtained present venue AP list **500;** or,
determining whether the distance between access device **185** pertinent transaction location and user mobile device **183** geo-location **336** recorded at a time having a smallest difference with the validation time $t_v$, or validation time $t_v$, is within or exceeds proximity threshold **525.**

At block **5,** as acknowledgment of relevance of the transaction to user mobile device **183** account, either ascertainer **108,** or user mobile device **183,** or access device **185,** concludes the user validation process with a status indicator "valid", comprising one or more of the following:

access device **185** proximity data comprised venue AP list **500** and user mobile device **183** obtained present venue AP list **500** both comprising identifier **501** "NET GEAR80EE" pertaining to access device **185** equipped AP **107,** or another AP identifier **502** "NET GEAR90EE"; or,
proximity log **337** as "proximate" indicating user mobile device **183** is communicatively paired with access device **185** equipped AP **107** comprising identifier **501** "NET GEAR80EE"; or,
distance of user mobile device **183** position $d_4$ at a time having a smallest difference with the validation time $t_v$, or validation time $t_v$, from transaction location $d_v$ is within proximity threshold **525.**

In contrary at block **6,** either ascertainer **108,** or user mobile device **183,** or access device **185,** concludes the user validation process with a status indicator "invalid", comprising any one of the following: user mobile device **183** obtained present venue AP list **500,** wherein access device **185** equipped AP **107** pertinent identifier **501** "NET GEAR80EE", or another AP identifier **502** "NET GEAR90EE", is unavailable, is irrelevant to access device **185** proximity data; or,

proximity log **337** is not "proximate" indicating user mobile device **183** is not communicatively paired with access device **185** equipped AP **107** comprising identifier **501** "NET_GEAR80EE"; or,

distance of user mobile device **183** position $d_8$ at a time having a smallest difference with the validation time $t_v$, or validation time $t_v$, from transaction location $d_v$ exceeds proximity threshold **525.**

In the event that user mobile device **183** performs the user validation process, user mobile device **183** sends through network **109** to ascertainer **108** a response message **642** comprising a status indicator "valid", or, a status indicator "invalid". In the event that access device **185** performs the user validation process, access device **185** sends through network **109** to ascertainer **108** a response message **642** comprising a status indicator "valid", or, a status indicator "invalid".

At block **7,** ascertainer **108** sends through network **109** an outcome message **643** - encompassing a status indicator "valid", or, a status indicator "invalid", to receiving nodes, comprising one or more of the following: facilitator **103;** issuer **104;** host **105;** user mobile device **183;** access device **185;** user mobile device **183** account pertinent payment network.

The receiving nodes pertaining to facilitator **103,** issuer **104,** host **105,** payment network, may comprise code driven processor and memory mounted application server or control system, as examples. As an option, outcome message **643** may include an alert with a status indicator "invalid". Whereas, transaction may comprise payment with user mobile device **183** account (payment card, credit card, issued by a bank or financial institute, as examples) to a host **105** bank account through access device **185** as point-of-sale terminal ("POS terminal"), or, banking withdrawal through access device **185** as automated teller machine ("ATM"), as examples: access device **185** at transaction location $d_v$ performs the validation time $t_v$ based user mobile device **183** requested transaction in accordance with a status indicator "valid", or, access device **185** rejects the user mobile device **183** requested transaction in accordance with status indicator "invalid", in an option, triggers an alert.

**FIG.8** presents a flow diagram of a variation of process **810** which is not in accordance with all features of the invention in conjunction with **FIGs. 2A, 2B,** and **6A.** Processing logic resides in a few entities and apparatuses as discussed hereinafter.

At block **1,** a host **105** pertinent computing device **189** generates (as an example, with an imbedded client application **250)** QR code **616,** encompassing information of facilitator **103** issued host **105** account, and *credit of settlement* ($100.00 in a currency, as an example) to be deposited into a host **105** account. QR code **616** may also encompass an effective IP address, and identifier (host **105** HCC/HID, unique identifier of computing device **189,** as examples).

User mobile device **183** (comprising controller **240**) obtains QR code **616** and therefore the encompassed information through optical scanning or data transmission via NFC, via network **109** or short-range wireless linkage **319.** Part or all of the received QR code **616** encompassed information is selectively displayed by the user mobile device **183** display & I/O **244.** User mobile device **183** sends to issuer **104** an imbedded client application **250** generated request message **111** with respect to validation time $t_v$, comprising: issuer **104** issued user mobile device **183** account information for authorization to transfer credit of settlement to the QR code **616** pertinent host **105** account; user mobile device **183** identifier; recorded validation time $t_v$.

As a possibility, request message **111** may also include user mobile device **183** pertinent biometrics (such as information pertaining to the iris, thumbprint), electronic signature, or password.

At block **2,** ascertainer **108** receives a user validation request message **110** - generated and sent by the issuer **104,** or a client application **250** upon detecting entry of user mobile device **183** account information - comprising selected information of request message **111** or user mobile device **183** account pertinent safe account info (table 1). Ascertainer **108** acknowledges the user validation request message **110** as request for verification of relevance of a validation time $t_v$ based credit of settlement to user mobile device **183** account, and performs the user validation process. Ascertainer **108** requests "mobility data" from user mobile device **183** via an ascertainment request message **641** sent through network **109.**

At block **3,** in response to ascertainment request message **641,** user mobile device **183** sends through network **109** to ascertainer **108** a response message **642** encompassing the mobility data - comprising the record of validation time $t_v$ pertinent request message **111.**

At block **4,** ascertainer **108** performs the user validation process, comprising validating the relevance of user mobile device **183** sent mobility data to the user validation request message **110** encompassed information.

At block **5,** as acknowledgment of relevance of the user validation request message **110** to user mobile device **183,** ascertainer **108** concludes the user validation process with a status indicator "valid", comprising the record of request message **111** is inclusive of the user mobile device **183** mobility data.

In contrary at block **6,** ascertainer **108** concludes the user validation process with a status indicator "invalid", comprising: response message **642** encompassing irrelevant information to record of request message **111** in user validation request message **110;** or, response message **642** is not received by ascertainer **108.**

At block **7,** ascertainer **108** sends through network **109** an outcome message **643** - encompassing a status indicator "valid", or, a status indicator "invalid", to receiving nodes, comprising one or more of the following:

issuer **104** pertinent receiving node (comprising code driven processor and memory mounted application server or control system, as examples);
user mobile device **183;**
QR code **616** pertinent computing device **189.**

In one example, outcome message **643** encompasses a blockchains code tagged to each *credit of settlement* pertinent currency unit ($1.00 as an example) deposited into the host **105** account with traceable information of the user mobile device **183** account as depositor, comprising (as an example):

```
($ git clone https://github.com/openchain/docker.git openchain
$ cd openchain $ cp templates/server.yml docker-compose.yml
$ mkdir data)
```

As an option, outcome message **643** may include an alert with a status indicator "invalid". In other examples, user mobile device **183** requested transfer of credit of settlement are in forms of received figures, imaging, etc., and therefore not limited to being encompassed in the QR code **616.**

**FIG.8** presents a flow diagram of an online user validation process **820** which is not in accordance with all features of the invention in conjunction with **FIGs. 1, 2A, 2B, 6A,** and **6B.** Processing logic resides in a few entities and apparatuses as discussed hereinafter.

At block **1,** user mobile device **183** (comprising controller **240,** with telematics functionality) belonging to a customer is communicatively linked with network **109.** In one example, the customer makes a purchase of selected merchandise items from a merchant **105** such as checking out at a cashier; alternatively, the customer finalizes a purchase transaction from a merchant **105** online store website **650** such as by clicking on a checkout iconic button **651** - providing input as indication of intention to pay for selected merchandise items using the method described here. Website **650** then displays a form **652** requesting entry of user mobile device **483** account information pertaining to an account or issuer **104** issued payment card as a code **653.**

User mobile device **183** - preconfigured to, or through an imbedded client application **250** - generates and records in memory for archive a payment code, authorizing payment for one purchase transaction and pertaining to information comprising any one or combination of: an encrypted unique code, a validation time $t_v$ concurrent to the time of generation of the payment code in sync with the ascertainer **108** application server **134** clock, user mobile device **183** phone number, purchase transaction sum, user mobile device **183** pertinent payment card information such as name of the payment card holder, payment card number, the corresponding payment network and issuer **104,** etc. In one example, one account is selected among a plurality of user mobile device **183** accounts (credit card accounts, bank accounts, payment cards, debit card accounts, as examples), while the payment code is generated as a payment QR **617** - which may be obtained (through scanning or RF/network transmission, as examples) by a POS terminal **185** (or a computing device **189**), and sent along with the purchase transaction sum and user mobile device **183** pertinent payment card number to an acquirer **103,** or a payment network related to the selected user mobile device **183** payment card account. Alternatively, the payment code is generated as a string code **618** comprising numeric digits and alphabetical letters - which may be entered as code **653** in the website **650.** String code **618** is then sent to a merchant **105** pertinent acquirer **103,** or a payment network - in one aspect, a payment request is sent to the payment card issuer **104.** The payment QR **617** and string code **618** may, or may not, encompass the user mobile device **183** payment card number, and time based, or not time based.

In one example, a user mobile device **183** generates on the basis of an algorithm for obtainment by a POS terminal **185** and records as archive in the memory a payment QR **617,** comprising:

validation time $t_v$ (e.g. date 2017-02-10, time 15:23: 10.00) of payment QR **617** generation - date and time in sync with an ascertainer **108** clock;
+44 (0) 20 8282 8080 - user mobile device **183** phone number;
Adam Smith - name of the payment card holder;

01 - issuer **104** code;
VisaNet™ - payment network of the payment card.

In another example, a user mobile device **183** generates on the basis of an algorithm for entry as code **653** to form **652** and records as archive in the memory a string code **618,** comprising: 01442082828080abxc2017021015231000 - as an example, encompassing purchase transaction sum ($128), validation time $t_v$ (date 2017-02-10, time 15:23:10.00), user mobile device **183** pertinent payment card information such as name of the payment card holder, payment card number, the corresponding payment network. In a further example, user mobile device **183** sends through network **109** a request message to ascertainer **108** for a code and receives in reply from ascertainer **108** a payment QR **617** or string code **618** - which, approval processor **121** of ascertainer **108** is configured to generate.

At block **2,** ascertainer **108** receives an issuer **104** issued user mobile device **183** payment card account and merchant **105** pertinent user validation request message **110** - generated and sent by any one of merchant **105** pertinent acquirer **103,** issuer **104,** merchant **105** pertinent POS terminal **185,** or a user mobile device **183** payment card account pertinent payment network - user validation request message **110** comprises information of the payment QR **617,** or string code **618.** Ascertainer **108** acknowledges the user validation request message **110** as request for verification of relevance of a validation time $t_v$ based merchant **105** pivotal purchase transaction to the user mobile device **183** payment card account, and performs the user validation process. Ascertainer **108** requests mobility data from user mobile device **183** via an ascertainment request message **641** sent through network **109.**

At block 3, in response to ascertainment request message **641,** user mobile device **183** sends through network **109** to ascertainer **108** a response message **642** encompassing the archival mobility data, comprising record of the generated or imported payment QR **617,** or, record of the string code **618.**

At block **4,** ascertainer **108** performs the user validation process by validating the user validation request message **110** encompassed information with user mobile device **183** sent response message **642** encompassed record.

At block **5,** as acknowledgment of validity of the user validation request message **110** pertinent merchant **105** pivotal purchase transaction charging on the user mobile device **183** payment card account, ascertainer **108** concludes the user validation process with a status indicator "valid", comprising:

response message **642** encompassing record of the payment QR **617;** or,
response message **642** encompassing record of the string code **618.**

In contrary at block **6,** ascertainer **108** concludes the user validation process with a status indicator "invalid", comprising:

response message **642** not including record of the payment QR **617,** or string code **618;** or,
response message **642** is not received by ascertainer **108.**

At block 7, ascertainer **108** sends through network **109** an outcome message **643** - encompassing a status indicator "valid", or, a status indicator "invalid", to receiving nodes, comprising one or more of the following: acquirer **103;** issuer **104;** merchant **105;** user mobile device **183;** POS terminal **185** (or computing device **189**); user mobile device **183** account pertinent payment network.

The receiving nodes pertaining to facilitator **103,** issuer **104,** merchant **105,** payment network, may comprise code driven processor and memory mounted application server or control system, as examples. As an option, outcome message **643** may include an alert with a status indicator "invalid".

**FIG.8** presents a flow diagram of another process **830** which is not in accordance with all features of the invention in conjunction with **FIGs. 1, 2A-2C, 4B, 4C, 5A,** and **6A.** Processing logic resides in a few entities and apparatuses as discussed hereinafter.

Process **800** commences at block 1: a venue AP list **500** - comprising network identifiers **501** "NET_GEAR80EE", **502** "NET_GEAR90EE", pertaining to host **105** pertinent environment **600** installed APs **107** available for providing pairing through short-range wireless linkage **319** to access network **109** - is captured and sent, at frequency and time intervals in accordance with preset operating parameters, by one or more of the APs **107,** or host **105** operated communication device. Ascertainer **108** receives and stores the venue AP list **500** as *venue reference profile* in the data storage medium **122.**

At block 2, ascertainer **108** endorses authorization to user mobile device **183** (comprising controller **240**) and computing device **189** in activation of a state change operation (locked/unlocked, as an example) of an environment **600** disposed short-range wireless linkage **319** linked access device **185** - ascertainer **108** registers the client device IP database **10.1** in the data storage medium **122,** comprising:

primary device identifier **411.1:** identifier of user mobile device **183;**

secondary device identifier **411.2:** identifier of computing device **189;**

status **412.1:** user mobile device **183** is ascertainer **108** acknowledged, in accordance with a host 105 (hotel, property landlord, property operator, club, as examples) issued user mobile device **183** account (employee account, tenancy at a hotel, property lease or ownership, membership account of a club providing sports or leisure facilities, with optional validity throughout a time period, as examples), as related to access device **185** - there may be a plurality of venue related user mobile devices **183;**

status **412.2:** computing device **189** is ascertainer **108** acknowledged as related to access device **185,** there may be a plurality of computing devices **189.n;**

AP identifier **413:** identifier of access device **185** communicatively linked environment **600** disposed AP **107;**

location **414:** geo-location of the environment **600,** which is ascertainer **108** acknowledged as venue related to access device **185;**

peering status **415:** "related" indicating computing device **189** is ascertainer **108** acknowledged as peering related to user mobile device **183,** and permitted to undertake an access device **185** state change operation; there may be a plurality of peering related user mobile devices **183.n,** computing devices **189.n;**

IP address **416:** effective computing device **189** device IP address, if available.

At block **3,** user mobile device **183** communicatively links with ascertainer **108** via pairing with the short-range wireless linkage **319.** User mobile device **183** sends to ascertainer **108** at a validation time $t_v$ an activation request message **112** - pertaining to activating an access device **185** state change operation. In an additional example, activation request message **112** also encompasses user mobile device **183** pertinent proximity data - a venue AP list **500** of the environment **600** is captured and encompassed in the activation request message **112.** Ascertainer **108** acknowledges the activation request message **112** as request for verification of relevance of a validation time $t_v$ pertinent access device **185** state change operation to user mobile device **183** account, and performs the user validation process. In an alternative example, ascertainer **108** detects the access device **185** pertinent AP **107** linked short-range wireless linkage **319** paired user mobile device **183.**

Ascertainer **108** further requests proximity data from user mobile device **183** via an ascertainment request message **641** sent through network **109.** In response to ascertainment request message **641,** user mobile device **183** sends through network **109** to ascertainer **108** a response message **642** encompassing the pertinent proximity data, comprising any one of:

identifier of user mobile device **183;**

present venue AP list **500;**

identifier of a communicatively linked short-range wireless access point; selected positions $d_n$ of the user blockchains path **520** recorded with respect to time in the controller **240** memory **242** within a time period, and recorded at a time having a smallest difference with the validation time $t_v$ or validation time $t_v$.

At block **4,** ascertainer **108** performs the user validation process by validating the user mobile device **183** sent proximity data, comprising:

verifying the identifier of user mobile device **183** in accordance with the data storage medium **122** stored client device IP database **10.1;**

validating the relevance of response message **642** encompassed venue AP list **500** to the data storage medium **122** stored *venue reference profile;*

ascertaining the response message **642** encompassed positions $d_n$ with data storage medium **122** stored user mobile device **183** user blockchains path **520;**

ascertaining the user mobile device **183** sent validation time $t_v$ pertinent geo-location in accordance with the location database **10.2** stored transaction pertinent host **105** geo-location **422** ("operation location").

At block **5,** as acknowledgment of relevance of the activation request message **112** to access device **185** state change operation, ascertainer **108** concludes the user validation process with a status indicator "valid", comprising one or more of the following:

identifier of user mobile device **183** registered and effective at the validation time $t_v$ in the data storage medium **122** stored client device IP database **10.1;**

response message **642** encompassed venue AP list **500** and *venue reference profile* both comprising network identifier **501** "NET_GEAR80EE", pertaining to access device **185** communicatively linked AP **107;**

response message **642** encompassed positions $d_n$ existing in the data storage medium **122** stored user mobile device **183** user blockchains path **520;**

response message **642** encompassed user mobile device **183** position $d_4$ at validation time $t_v$ is within a proximity threshold from the operation location $d_v$.

In contrary at block **6,** ascertainer **108** concludes the user validation process with a status indicator "invalid", comprising any one of the following:

identifier of user mobile device **183** ineffective at the validation time $t_v$ in the data storage medium **122** stored client device IP database **10.1;**

response message **642** encompassed venue AP list **500** is irrelevant as in unavailable network identifiers in commonality with the *venue reference profile;*

irrelevance of response message **642** encompassed positions $d_n$ to the data storage medium **122** stored user mobile device **183** user blockchains path **520;**

response message **642** encompassed user mobile device **183** position $d_8$ at validation time $t_v$ (from operation location $d_v$) exceeds proximity threshold **525;**

response message **642** is not received by ascertainer **108.**

At block **7,** ascertainer **108** generates and transmits over network **109** an outcome of the user validation process, comprising any one of the following:

status indicator "valid" - approval processor **121** sending through a selected environment **600** installed AP **107** a commanding signal **644** to the access device **185,** actuating the operative state from locked to unlocked; wherein, the commanding signal **644** may encompass a code;

status indicator "invalid" - approval processor **121** sending an outcome message **643** for receiving by a host **105** pertinent receiving node (comprising code driven processor and memory mounted application server or control system, as examples); wherein, access device 185 forbidding actuating the operative state from locked to unlocked. As an option, outcome message **643** may include an alert with status indicator "invalid" and is recorded in data storage medium **122** by ascertainer **108.** The receiving node may comprise a tenant, landlord, property operator, facility operator, employee and visitor.

In an alternative example at block **3,** computing device **189** sends to ascertainer **108** at a validation time $t_v$ an activation request message **112** - pertaining to activating an access device **185** state change operation. Ascertainer **108** transports the activation request message **112** to user mobile device **183** at block **4,** wherein, ascertainer **108** sends to computing device **189** a user mobile device **183** request pertaining to capturing and sending real-time imaging of the computing device **189** user. At block **5,** user mobile device **183** sends to ascertainer **108** a status indicator "valid"; in contrary at block **6,** user mobile device **183** sends to ascertainer **108** a status indicator "invalid". At block 7, ascertainer **108** generating and transmitting over network **109** through a selected environment **600** installed AP **107** an outcome, comprising:

commanding signal **644** for a status indicator "valid" to the access device **185,** access device **185** actuating the operative state from locked to unlocked; or,

outcome message **643** for a status indicator "invalid" to the computing device **189,** access device **185** forbidding actuating the operative state from locked to unlocked.

**FIG.8** presents a flow diagram of a process **840** which is not in accordance with all features of the invention in conjunction with **FIGs. 2B, 3, 4C, 5A, 5C,** and **6A.** Processing logic resides in a few entities and apparatuses as discussed hereinafter.

At block **1:** user mobile device **183** (comprising controller **240**) registers an account through facilitator **103** for authorization of activation of operative state change ("actuation") of collateral apparatuses **487.1** and **487.2** (not shown) through controlling access device **185,** comprising:

collateral apparatus **487.1** - operative state 1 pertaining to mechanism position allowing opening of a door in which it is embedded; operative state 2 pertaining to mechanism position locking the door in position;

collateral apparatus **487.2** - operative state 1 constituting to operating a appliance, machine; operative state 2 constituting to not operating the appliance, machine.

Collateral apparatus **487.1** generally comprises a control mechanism of an automobile door lock, door of a flat, or door of a safe. In an exemplary example, collateral apparatus **487.2** attributes to the power circuit of an appliance or relay controlling the operative mode of an appliance. In another example, collateral apparatus **487.2** attributes to an automobile electronic or electrical starting system of an engine propelled by electrical cell, fuel cell, or gasoline, or a hybrid combination of which; wherein, operative state 1 constitutes to power generation mechanism in dynamic state to propel host **105** as automobile to travel in displacement, whereas, operative state 2 constitutes to power generation mechanism in static state to disable host **105** from travel in displacement. In furtherance, access device **185** is a network linked programmable processor mounted control unit, or a central control hub, capable of processing data and controlling the operative state of collateral apparatuses **487.1** and **487.2** in host **105** as an automobile, a house, a safe.

Through registration of the client device IP database **10.1** in the data storage medium **122,** ascertainer **108** acknowledges - in accordance with a facilitator **103** (vehicle owner, vehicle rental operator, property operator, tenant, as examples) acknowledged or issued user mobile device **183** account (ownership account, membership account or rental account with validity throughout a time period, as examples) - access device **185** peering related user mobile device **183,** is therefore authorized to actuate operative state change of host **105** pertinent collateral apparatuses **487.1** and **487.2** through access device **185.** Facilitator **103** operating host **105** imposes operative restrictions ("restrictions") on one or more user mobile devices 183 in operation of host **105,** as examples: limited ceiling in host **105** velocity and geographical territories of travel, operation time spans effective in days of the week or month, hours and minutes of the day, distance in displacement in a day or totality during one or more operation time spans, or any combination of the above.

At block **2,** user mobile device **183** approaches host **105** in an environment **600;** host **105** is equipped with access device **185** and a network **109** linked AP **107** - which has the capability to provide short-range wireless linkage **319** (using Bluetooth™, WiFi, as examples) for data transport, which has the capability to process data communication with ascertainer **108** through the communicatively linked AP **107.** User mobile device **183** sends at validation time $t_v$ via short-range wireless linkage **319** to the communicatively paired AP **107** linked access device **185** a request for actuation in operative state change of collateral apparatus **487.1,** or collateral apparatus **487.2,** from operative state 2 to 1. Host **105** pertinent access device **185** is configured to obtain from geo-location system **133** sent signals and send the present geo-location data, or AP **107** identifier **502** "NET_GEAR90EE", for receiving by ascertainer **108** - encompassed in user validation request message **110,** or in a separate message - during processing a user mobile device **183** pertinent operation.

Ascertainer **108** receives a user mobile device **183** account and host **105** pertinent user validation request message **110** - generated and sent by user mobile device **183,** or, access device **185** - comprising selected user mobile device **183** account information and present geo-location data ("actuation location"). Ascertainer **108** acknowledges the user validation request message **110** as request for verification of relevance of a validation time $t_v$ based host **105** pivotal access device **185** actuation to the user mobile device **183** account. In one example, via network **109,** ascertainer **108** in a sent ascertainment request message **641** requests "proximity data" from user mobile device **183;** in another example, ascertainer **108** sends an ascertainment request message **641** to access device **185** requesting the "access device **185** proximity data", comprising: actuation location calculated on the basis of geo-location system **133** sent signals; or, present venue AP list **500;** or, identifier **502** "NET_GEAR90EE" pertaining to access device **185** equipped AP **107.**

At block **3,** in response to ascertainment request message **641,** user mobile device **183** sends a response message **642** encompassing the proximity data to ascertainer **108,** comprising:

present venue AP list **500** obtained by the imbedded client application **250;**

selected positions $d_n$ of the user blockchains path **520** recorded with respect to time in the controller **240** memory **242** within a time period, and recorded at a time having a smallest difference with the validation time $t_v$ or validation time $t_v$.

In another example, access device **185** sends to ascertainer **108** a response message **642** encompassing the access device **185** proximity data. Alternatively, ascertainer **108** sends via network **109** the user mobile device **183** proximity data to access device **185.** In furtherance, ascertainer **108** sends via network **109** the access device **185** proximity data to user mobile device **183;** user mobile device **183** retrieves the controller **240** memory **242** stored proximity data for validating the relevance to the access device **185** proximity data in accordance with the user validation process.

At block **4,** either ascertainer **108,** or user mobile device **183,** or access device **185,** performs the user validation process, comprising:

validating the relevance of the access device **185** proximity data comprised venue AP list **500** to the user mobile device **183** obtained present venue AP list **500;** or,

validating the relevance of the access device **185** proximity data comprised identifier **502** "NET GEAR90EE" pertaining to access device **185** equipped AP **107,** or another AP identifier **502 501** "NET GEAR80EE", to the user mobile device **183** obtained present venue AP list **500;** or,

determining whether the distance between access device **185** pertinent actuation location and user mobile device **183** geo-location **336** recorded at a time having a smallest difference with the validation time $t_v$, or validation time $t_v$, is within or exceeds proximity threshold **525.**

At block **5,** as acknowledgment of relevance of host **105** to user mobile device **183** account, either ascertainer **108,** or user mobile device **183,** or access device **185,** concludes the user validation process with a status indicator "valid", comprising one or more of the following:

access device **185** proximity data comprised venue AP list **500** and user mobile device **183** obtained present venue AP list **500** both comprising identifier **502** "NET_GEAR90EE" pertaining to access device **185** equipped AP **107,** or another AP identifier **501** "NET_GEAR80EE"; or,
proximity log **337** as "proximate" indicating user mobile device **183** is communicatively paired with access device **185** equipped AP **107** comprising identifier **502** "NET GEAR90EE"; or,
distance of user mobile device **183** position $d_4$ at a time having a smallest difference with the validation time $t_v$, or validation time $t_v$, from transaction location $d_v$ is within proximity threshold **525.**

In contrary at block **6,** either ascertainer **108,** or user mobile device **183,** or access device **185,** concludes the user validation process with a status indicator "invalid", comprising any one of the following: user mobile device **183** obtained present venue AP list **500,** wherein access device **185** equipped AP **107** pertinent identifier **502** "NET GEAR90EE" , or another AP identifier **501** "NET_GEAR80EE", is unavailable, is irrelevant to access device **185** proximity data; or,

proximity log **337** is not "proximate" indicating user mobile device **183** is not communicatively paired with access device **185** equipped AP **107** comprising identifier **502** "NET_GEAR90EE"; or,
distance of user mobile device **183** position $d_8$ at a time having a smallest difference with the validation time $t_v$, or validation time $t_v$, from transaction location $d_v$ exceeds proximity threshold **525.**

In the event that user mobile device **183** performs the user validation process, user mobile device **183** sends through network **109** to ascertainer **108** a response message **642** comprising a status indicator "valid", or, a status indicator "invalid". In the event that access device **185** performs the user validation process, access device **185** sends through network **109** to ascertainer **108** a response message **642** comprising a status indicator "valid", or, a status indicator "invalid".

At block **7,** ascertainer **108** sends through network **109** to access device **185** an outcome message **643,** or, ascertainer **108** receives through network **109** from an access device **185** sent outcome message **643** and sends to user mobile device **183,** comprising:

status indicator "valid" - access device **185** actuating collateral apparatus **487.1** from operative state 2 to operative state 1, authorizing actuation of collateral apparatus **487.2** from operative state 2 to operative state 1; or,
status indicator "invalid" - access device **185** forbidding actuation of collateral apparatus **487.1** from operative state 2 to operative state 1, forbidding actuation of collateral apparatus **487.2** from operative state 2 to operative state 1.

As an option, outcome message **643** may include an alert with status indicator "invalid" while access device **185** triggers a siren (not shown), and ascertainer **108** records in data storage medium **122.** Access device **185** performs the user mobile device **183** requested actuation in accordance with a status indicator "valid", or, access device **185** rejects the user mobile device **183** requested actuation in accordance with status indicator "invalid", in an option, triggers an alert.

In a further example, as host **105** incumbent AP **107** paired, via short-range wireless linkage **319,** user mobile device **183** - ascertainer **108** acknowledged pertinent to host **105** - traverses away from host **105** in distance beyond a proximity threshold corresponding to the effective pairing range, the pairing linkage is dislodged. In accordance with an operating protocol, access device **185** actuates collateral apparatuses **487.1, 487.2,** to change an effective operative state 1 to operative state 2.

In a yet further example, user mobile device **183** is unassociated with facilitator **103** and therefore host **105;** host **105** pertinent or access device **185** communicatively linked computing device **189** displays a QR code **616** encrypted payment sum ($10.00, as an example) for settlement, which must be settled and paid with an issuer **104** issued user mobile device **183** account (bank account, payment card, credit card account, as examples) - access device **185** actuates the collateral apparatus **487.1** to change from operative state 2 to operative state 1 after receiving a message through network **109** from a host **105** pertinent acquirer bank **103** as confirmation of processed payment transaction, in accordance with an outcome message **643** with status indicator "valid", assuring full settlement of the outstanding payment has been transferred from the user mobile device **483** account to a host **105** pertinent acquirer bank **103** account (bank account, as an example).

**FIG.8** presents a flow diagram of a process **850** which is not in accordance with all features of the invention in conjunction with **FIGs. 2B, 6A,** and **6C.** Processing logic resides in a few entities and apparatuses as discussed hereinafter.

At block 1, ascertainer **108** receives from a plurality of client application **250** imbedded user mobile devices **183.1, 183.2, 183.3, 183.4, 183.5,** information of accounts (comprising account names and numbers, as examples) respectively issued by issuers **104.1, 104.2, 104.3, 104.4, 104.5;** in one example, ascertainer **108** ascertains the accounts information with the plurality of issuers **104.1-5;** ascertainer **108** may also ascertain the addresses of accounts by tracking the venue related locations of user mobile devices **183.1-5** in accordance with the second threshold as previously discussed.

At block **2,** user mobile device **183.5** as administrator of client application **250** corresponded and operated communications group **680** receives from user mobile devices **183.1-4,** a request, or a response to a user mobile device **183.5** prompted request, to participate; user mobile device **183.5** accepts user mobile device **183.4** as non-paying participant, which may exit from communications group **680** at will, and accepts user mobile devices **183.1-3,** as paying participants, which require authorization by user mobile device **183.5** to exit from communications group **680.** Number of non-paying participant is therefore 1, while number of paying participants is 3.

In an exemplary example at block **3,** user mobile device **183.1** enters to communications group **680** pricing figure **681 -** item of personal use.

At block **4,** user mobile device **183.5** unicasts to the paying participants in accordance with a settlement sum **685** ($100 as an example) - either entered by user mobile device **183.5,** or, imported by importer **253** of user mobile device **183.5** imbedded client application **250** as sent by a merchant **105,** comprising:

subsum **691** to user mobile device **183.1** = (sum **685** - pricing figure **681**) / 4 + pricing figure **681;**
subsum **692** to user mobile device **183.2** = (sum **685** - pricing figure **681**) / 4;
subsum **693** to user mobile device **183.3** = (sum **685** - pricing figure **681**) / 4.

At block **5,** user mobile device **183.1** settles the subsum **691** through the web site or URL of issuer **104.1** in communications group **680;** communications group **680** has a web browser functionality, comprising:

selecting administrator **686** - retrieving the registered user mobile device **183.5** account number and issuer **104.5** code as input of receiving account;
selecting payable **688** - retrieving the subsum **691** for transfer from issuer **104.1** pertinent user mobile device **183.1** account to issuer **104.5** pertinent mobile device **183.5** account in receiving **689.**

At block **6,** mobile device **183.2** ignores a prompted request of settlement.

At block **7,** communications group **680** is displayed by display & I/O **244** on user mobile devices **183.1-5,** comprising completion of transfer **683.**

In one aspect, the accounts comprise savings accounts, payment card accounts, credit card accounts; ascertainer **108** receives confirmation of the subsum **691** transfer from issuer **104.1** - ascertainer **108** ascertains user mobile device **183.5** and other participants through communications group **680** that user mobile device **183.1** has transferred the subsum **691** from an issuer **104.1** pertinent user mobile device **183.1** account to the issuer **104.5** pertinent user mobile device **183.5** account.

Alert Trigger Policy

Ascertainer **108** activates an alert and sends, in accordance with an alert trigger process, to any one or combination of distinct receiving nodes of facilitator **103,** issuer **104,** host **105,** account pertinent user mobile device **183,** communication device **183,** access device **185,** payment network, comprising:
(1) instant communication message; (2) notification via Email; (3) notification via an automatic telephone voice; (4) notification via a multimedia message; (5) activation of a siren installed at a host **105;** (6) activation of an access device **185** equipped siren; (7) recording a processed alert trigger to the data storage medium **122.**

Short-range wireless communication

As described herein, short-range wireless communication over the wireless communication path may use any of a variety of different physical and protocol layer communication methods. For example, the communication technology may include optical, infrared, radio transmission, RFID, or any other suitable communication technology, and may incorporate IEEE 802.11, 802.15, Bluetooth™, PCS, WiFi, or any other suitable communication method or standard.

Account

The discussed embodiments may also include other host **105** (any organization requiring personal identification such as a library, government, airplane, vessel, docking berth, building pass, land pass, merchandise vendor, etc.) acknowledged or issued user mobile device **183** account (identification card, driver's license, shopper's payment card, as examples).

One skilled in the art will recognize that the above-described aspects, features, embodiments and advantages are intended to be illustrative, are therefore strictly illustrative and do not attribute to limitations of the appended claims except where explicitly recited in a claim(s) - which can be practiced according to embodiments or examples that are combined, so that activation by one mechanism can be followed or substituted by another mechanism. For example, a user account may be issued by an issuer, a facilitator, a third party, or an ascertainer; while an access device may be under operation of a host, an issuer or a facilitator. Web browsing history, transaction location ascertainment and user blockchains path may be enacted in any embodiment or example without limitation in sequence and numeration. In furtherance, an access device may be substituted by a communication device with or without telematics functionality.

In the specification, certain components of the invention may be described in terms of algorithms and/or steps performed by a software application. In many cases, such descriptions are intended to set forth the invention using representations that are commonly used among those of skill in the arts. Accordingly, various terms such as "ascertaining", "determining", "calculating", "processing", or the like, may be used herein. Such terms are intended to refer to processes performed by a software and/or hardware device such as a computer system. Furthermore, the invention can be implemented as or in combination of a method, system, computer program product, smartphone, software app with functionality in application, user interface, ATM, automobile navigation system, automobile door lock system, electronic door lock, turnstile gate, POS terminal, smart home control hub, or any combination thereof.

## Claims

**1.** A method at an ascertainer device of authorizing an online operation to be performed by a computing device (189), the online operation pertaining to a mobile device (183) associated account according to mobile device pertinent data, wherein the method comprises:

· associating a mobile device (183) with an account, through an ascertainer device (108) recording in a database a mobile device pertinent identifier with an account number, or with a code pertaining to the account number;
· the ascertainer device (108) receiving proximity data from the mobile device (183) or from a computing device (189), the mobile device (183) and the computing device (189) having been paired to a wireless network (319), wherein the proximity data from the mobile device comprises pairing records including pairing time span data and the identifier and IP address (335) of the computing device (189) that is communicatively linked to the mobile device (183) through the wireless network (319), wherein the proximity data from the computing device comprises pairing records including pairing time span data and the identifier and IP address (335) of the computing device (189) and the identifier of the mobile device (183) through the wireless network (319);
· the ascertainer device (108) recording the computing device (189) as peering related to the mobile device (183) in a client device IP database (10.1) if a time duration of the pairing of both the mobile device (183) and the computing device (189) to the wireless network (319) together with one another is beyond a time threshold;
. the ascertainer device (108) receiving (702) a validation request message (110) to authorize an online operation entailing at least one website and pertaining to the account, the validation request message (110) comprising the account number or the code pertaining to the account number and a validation time of the online operation, the account associated with the mobile device (183) in the database, the ascertainer device (108) further receiving the at least one website;
· the ascertainer device (108):

■ obtaining (703) the IP address of the computing device (189) that is recorded as peering related to the mobile device (183) from the client device IP database (10.1), and sending (704) a request message (641) to the computing device (189) to request a web browsing history (510) of a time period encompassing the validation time from the computing device, and
■ if the ascertainer device (108) fails to obtain the IP address of the computing device (189), then sending (704) a request message (641) to the mobile device (183) to request a web browsing history (510) of a time period encompassing the validation time from the mobile device;

· the ascertainer device (108) receiving (704) a response message (642) comprising the requested web browsing history (510);

. the ascertainer device (108) performing (706) a validation process to determine whether the online operation of the validation request message (110) is to be authorised by validating the relevance of the web browsing history (510) to the online operation, wherein the online operation is authorised if the web browsing history (510) comprises the at least one web site entailed in the performance of the online operation at the validation time; and,

· the ascertainer device (108) sending (709) through a network the result of the validation process (643) to the mobile device (183) to authorise or not authorise the online operation.

**2.** The method of claim 1, wherein receiving the validation request message (110) comprises:

· receiving information pertaining to payment for purchase from an online store with the mobile device associated account through a web site; or,

· receiving information pertaining to transfer of payment from the mobile device associated account to a receiving account.

**3.** The method of claim 1, wherein receiving the proximity data comprises any one or a combination of:

· receiving an identifier of a communicatively linked short-range wireless access point (107);

· receiving a detected present list of short-range wireless access points (107) available for communicative linkage at a location where a transaction corresponding to the online operation is to be carried out, the detected present list comprising identifiers of communicatively linked short-range wireless access points recorded by the mobile device at, or within a time threshold from, the juncture of the online operation.

**4.** The method of claim 1, wherein recording the computing device (189)_as peering related to the mobile device (183) if the time duration of communicative pairing of both the mobile device (183) and the computing device (189) to the wireless network (319) is beyond the time threshold, comprises any one or combination of:

· recording the identifier of the computing device with any one or a combination of the account number or code, or, a mobile device (183) pertinent identifier, comprising a mobile device or account pertinent code, name or number;

· determining that the mobile device (183) and the computing device (189) are paired to the wireless network (319) for a total time duration exceeding the time threshold.

**5.** The method of claim 1, wherein performing the validation process further comprises any one of:

· sending a message of authorization to process the online operation;

· sending a message of rejection to not process the online operation.

**6.** The method of claim 1, wherein sending the result of the validation process comprises any one or combination of:

· sending a valid status indicator if the online operation is authorised;

· sending verification of a mobile device sent web browsing history pertaining to the online operation;

· sending verification of an access point (107) installed at the location of the online operation in the mobile device sent detected present list of a plurality of short-range wireless access points recorded at, or within a time threshold from, a juncture of the online operation;

· sending verification of a record of a sent message of money transfer pertaining to the mobile device associated account;

· sending verification of a mobile device memory stored record of a generated or imported code for performing the online operation;

· sending a blockchains code tagged to a unitary currency in a payment transfer.

**7.** The method of claim 1, wherein sending (709) the result of the validation process in the case where the online operation was not authorized comprises any one or combination of:

· sending an invalid status indicator for triggering an alert;

· notifying any one or combination of distinct groups of receiving nodes through sending a message via a network to the mobile device (183) or the computing device (189), wherein the message comprises any one or more of: an Email, a signal, an instant communication message, an automatic telephone voice, a multimedia message;

· notifying selected users among a first group of receiving nodes, comprising any one or more of a tenant, landlord, property operator, facility operator, employee or visitor;
· notifying selected users among a second group of receiving nodes, comprising any one or more of an acquirer bank, account issuer bank, merchant, or payment network;
· sending signals/data to a communicatively linked access device as a third receiving node during a triggered alert, which receives the alert signal and denies authorization of the online operation;
· recording a triggered alert in a database.

**8.** The method of claim 1, further comprising sending the result of the validation process (643) to any one or more of:

· a processor and memory coupled application server or control system of an issuer bank (104) managing the mobile device associated account;
· a processor and memory coupled application server or control system of an acquirer bank (103) managing a merchant associated account;
· a processor and memory coupled application server or control system of an institute managing a user account;
· a control device changing to an operative state from a non-operative state upon receiving validation process authorization.

**9.** The method of claim 1, wherein the account comprises any one of:

· a bank account issued by a bank;
· a credit card account issued by a bank;
· a credit card account issued by a payment network;
· a debit card account issued by a financial institute;
· an employee account issued by an employee company;
· a membership account issued by a club;
· a payment card issued by a financial institute;
· a residential account issued by a property landlord;
· a tenancy account issued by a bank, a hotel, or a lodging facility;
· a vehicle account issued by a vehicle owner;
· a vehicle customer account issued by a vehicle management, or rental, company.

**10.** An ascertainer device for authorizing an online operation to be performed by a computing device (189), the online operation pertaining to a mobile device (183) associated account according to mobile device pertinent data, wherein the ascertainer device (108) comprises a processor mounted application server (134) and a memory (122), working with or within the processor mounted application server, storing instructions and coding, which when executed by the processor mounted application server, are configured to perform the method of claim 1.

## Patentansprüche

**1.** Verfahren an einem Bestimmungsgerät zum Autorisieren einer von einem Rechengerät (189) durchzuführenden Online-Operation, wobei die Online-Operation ein mit einem Mobilgerät (183) assoziiertes Konto gemäß mobilgerätebezogenen Daten betrifft, wobei das Verfahren Folgendes beinhaltet:

• Assoziieren eines Mobilgeräts (183) mit einem Konto durch ein Bestimmungsgerät (108), das in einer Datenbank eine mobilgerätebezogene Kennung mit einer Kontonummer oder mit einem auf die Kontonummer bezogenen Code aufzeichnet;
• Empfangen, durch das Bestimmungsgerät (108), von Proximitätsdaten von dem Mobilgerät (183) oder von einem Rechengerät (189), wobei das Mobilgerät (183) und das Rechengerät (189) mit einem drahtlosen Netzwerk (319) gepaart wurden, wobei die Proximitätsdaten von dem Mobilgerät Paarungsdatensätze umfassen, die Paarungszeitspannendaten und die Kennung und IP-Adresse (335) des Rechengeräts (189) enthalten, das mit dem Mobilgerät (183) über das drahtlose Netzwerk (319) kommunikativ verknüpft ist, wobei die Proximitätsdaten vom Rechengerät Paarungsdatensätze umfassen, die Paarungszeitspannendaten und die Kennung und IP-Adresse (335) des Rechengeräts (189) und die Kennung des Mobilgeräts (183) über das drahtlose Netzwerk (319) umfassen;
• Aufzeichnen, durch das Bestimmungsgerät (108), des Rechengeräts (189) als mit dem Mobilgerät (183) Peering-bezogen in einer Client-Gerät-IP-Datenbank (10.1), wenn eine gemeinsame Zeitdauer der Paarung sowohl des Mobilgeräts (183) als auch des Rechengeräts (189) mit dem drahtlosen Netzwerk (319) über eine Zeitschwelle hinausgeht;

• Empfangen (702), durch das Bestimmungsgerät (108), einer Validierungsanforderungsnachricht (110 zum Autorisieren einer Online-Operation, die mindestens eine Website involviert und das Konto betrifft, wobei die Validierungsanforderungsnachricht (110) die Kontonummer oder den Code in Bezug auf die Kontonummer und eine Validierungszeit der Online-Operation umfasst, wobei das Konto mit dem Mobilgerät (183) in der Datenbank assoziiert ist, wobei das Bestimmungsgerät (108) ferner die mindestens eine Website empfängt;

• wobei das Bestimmungsgerät (108):

■ die als mit dem Mobilgerät (183) Peering-bezogen aufgezeichnete IP-Adresse des Rechengeräts (189) aus der Client-Geräte-IP-Datenbank (10.1) erhält (703) und eine Anforderungsnachricht (641) zum Rechengerät (189) sendet (704), um eine Web-Browsing-Historie (510) eines die Validierungszeit umfassenden Zeitraums vom Rechengerät anzufordern, und

■ wenn das Bestimmungsgerät (108) die IP-Adresse der Rechengeräts (189) nicht erhält, eine Anforderungsnachricht (641) zum Mobilgerät (183) sendet (704), um eine Web-Browsing-Historie (510) eines die Validierungszeit umfassenden Zeitraums vom Mobilgerät anzufordern;

• Empfangen (704), durch das Bestimmungsgerät (108), einer Antwortnachricht (642), die die angeforderte Web-Browsing-Historie (510) umfasst;

• Durchführen (706) eines Validierungsprozesses durch das Bestimmungsgerät (108), um durch Validieren der Relevanz der Web-Browsing-Historie (510) für die Online-Operation festzustellen, ob die Online-Operation der Validierungsanforderungsnachricht (110) zu autorisieren ist, wobei die Online-Operation autorisiert wird, wenn die Web-Browsing-Historie (510) die mindestens eine Website umfasst, die in der Durchführung der Online-Operation zum Validierungszeitpunkt involviert ist; und

• Senden (709), durch das Bestimmungsgerät (108), des Ergebnisses des Validierungsprozesses (643) über ein Netzwerk zum Mobilgerät (183), um die Online-Operation zu autorisieren oder nicht zu autorisieren.

**2.** Verfahren nach Anspruch 1, wobei das Empfangen der Validierungsanforderungsnachricht (110) Folgendes beinhaltet:

• Empfangen von Informationen in Bezug auf eine Zahlung für einen Kauf in einem Online-Store mit dem mit dem Mobilgerät assoziierten Konto über eine Website; oder

• Empfangen von Informationen in Bezug auf die Überweisung einer Zahlung von dem mit dem Mobilgerät assoziierten Konto auf ein Empfängerkonto.

**3.** Verfahren nach Anspruch 1, wobei das Empfangen der Proximitätsdaten eines oder eine Kombination umfasst von:

• Empfangen einer Kennung eines kommunikativ verknüpften drahtlosen Kurzstrecken-Zugangspunkts (107);

• Empfangen einer detektierten aktuellen Liste von drahtlosen Kurzstrecken-Zugangspunkten (107), die für eine kommunikative Verknüpfung an einem Ort verfügbar sind, an dem eine der Online-Operation entsprechende Transaktion durchgeführt werden soll, wobei die detektierte aktuelle Liste Kennungen von kommunikativ verknüpften drahtlosen Kurzstrecken-Zugangspunkten umfasst, die von dem Mobilgerät zum Zeitpunkt der Online-Operation oder innerhalb einer Zeitschwelle nach dieser aufgezeichnet wurden.

**4.** Verfahren nach Anspruch 1, wobei das Aufzeichnen des Rechengeräts (189) als mit dem Mobilgerät (183) Peering-bezogen, wenn die Zeitdauer der kommunikativen Paarung sowohl des Mobilgeräts (183) als auch des Rechengeräts (189) mit dem drahtlosen Netzwerk (319) jenseits des Zeitschwellenwerts liegt, eine beliebige oder eine Kombination von Folgendem beinhaltet:

• Aufzeichnen der Kennung des Rechengeräts mit einer oder einer Kombination aus Kontonummer oder Code oder einer Kennung für das Mobilgerät (183), die eine(n) für das Mobilgerät oder das Konto relevante(n) Code, Namen oder Nummer umfasst;

• Bestimmen, dass das Mobilgerät (183) und das Rechengerät (189) mit dem drahtlosen Netzwerk (319) für eine Gesamtzeitdauer gepaart sind, die die Zeitschwelle überschreitet.

**5.** Verfahren nach Anspruch 1, wobei das Durchführen des Validierungsprozesses ferner Folgendes beinhaltet:

• Senden einer Autorisierungsnachricht zum Verarbeiten der Online-Operation;

• Senden einer Ablehnungsnachricht zum Nichtverarbeiten der Online-Operation.

**6.** Verfahren nach Anspruch 1, wobei das Senden des Ergebnisses des Validierungsprozesses eines oder eine Kombination beinhaltet von:

• Senden eines Gültigstatus-Indikators, wenn die Online-Operation autorisiert ist;
• Senden einer Verifizierung einer von einem Mobilgerät gesendeten Web-Browsing-Historie in Bezug auf die Online-Operation;
• Senden einer Verifizierung eines am Ort der Online-Operation installierten Zugangspunkts (107) in der vom Mobilgerät gesendeten, detektierten, aktuellen Liste mehrerer drahtloser Kurzstrecken-Zugangspunkte, die zu einem Zeitpunkt der Online-Operation oder innerhalb einer Zeitschwelle nach dieser aufgezeichnet wurden;
• Senden einer Verifizierung eines Datensatzes einer gesendeten Nachricht einer Geldüberweisung in Bezug auf das mit dem Mobilgerät assoziierten Konto;
• Senden der Verifizierung eines im Speicher eines Mobilgeräts gespeicherten Datensatzes eines generierten oder importierten Codes zur Durchführung der Online-Operation;
• Senden eines Blockchain-Codes, getaggt zu einer einheitlichen Währung in einer Zahlungsüberweisung.

**7.** Verfahren nach Anspruch 1, wobei das Senden (709) des Ergebnisses des Validierungsprozesses in dem Fall, in dem die Online-Operation nicht autorisiert war, eines oder eine Kombination beinhaltet von:

• Senden eines Ungültigstatus-Indikators zum Auslösen einer Warnung;
• Benachrichtigen einer oder einer Kombination von verschiedenen Gruppen von Empfangsknoten durch Senden einer Nachricht über ein Netzwerk zu dem Mobilgerät (183) oder dem Rechengerät (189), wobei die Nachricht eines oder mehrere von einer E-Mail, einem Signal, einer Sofortkommunikationsnachricht, einer automatischen Telefonstimme, einer Multimedia-Nachricht umfasst;
• Benachrichtigen ausgewählter Benutzer aus einer ersten Gruppe von Empfangsknoten, die einen oder mehrere aus einem Mieter, Vermieter, Immobilienbetreiber, Anlagenbetreiber, Angestellten und Besucher umfasst;
• Benachrichtigen ausgewählter Benutzer aus einer zweiten Gruppe von Empfangsknoten, die eines oder mehrere von einer Acquirer-Bank, einer Kontoaussteller-Bank, einem Händler und einem Zahlungsnetzwerk umfasst;
• Senden von Signalen/Daten zu einem kommunikativ verknüpften Zugangsgerät als dritter Empfangsknoten während einer ausgelösten Warnung, der das Warnsignal empfängt und die Autorisierung der Online-Operation verweigert;
• Aufzeichnen einer ausgelösten Warnung in einer Datenbank.

**8.** Verfahren nach Anspruch 1, das ferner das Senden des Ergebnisses des Validierungsprozesses (643) beinhaltet zu einem oder mehreren von:

• einem prozessor- und speichergekoppelten Anwendungsserver oder Steuersystem einer ausstellenden Bank (104), die das mit dem Mobilgerät assoziierte Konto verwaltet;
• einem prozessor- und speichergekoppelten Anwendungsserver oder Steuersystem einer Acquirer-Bank (103), die ein mit dem Händler assoziiertes Konto verwaltet;
• einem prozessor- und speichergekoppelten Anwendungsserver oder Steuersystem eines Instituts, das ein Benutzerkonto verwaltet;
• einem Steuergerät, das nach dem Erhalt einer Validierungsprozess-Autorisierung von einem nichtoperativen Zustand in einen operativen Zustand wechselt.

**9.** Verfahren nach Anspruch 1, wobei das Konto eines umfasst von:

• einem von einer Bank ausgestellten Bankkonto;
• einem von einer Bank ausgestellten Kreditkartenkonto;
• einem von einem Zahlungsnetzwerk ausgestellten Kreditkartenkonto;
• einem von einem Finanzinstitut ausgestellten Debitkartenkonto;
• einem von einem Mitarbeiterunternehmen ausgestellten Mitarbeiterkonto;
• einem von einem Verein ausgestellten Mitgliedskonto;
• einer von einem Finanzinstitut ausgestellten Zahlungskarte;
• einem von einem Vermieter ausgestellten Wohnungskonto;
• einem von einer Bank, einem Hotel oder einem Beherbergungsbetrieb ausgestellten Mietkonto;

• einem von einem Fahrzeugeigentümer ausgestellten Fahrzeugkonto;
• einem von einem Fahrzeugmanagement- oder - vermietungsunternehmen ausgestellten Fahrzeugkundenkonto.

**10.** Bestimmungsgerät zum Autorisieren einer von einem Computergerät (189) durchzuführenden Online-Operation, wobei die Online-Operation ein mit einem Mobilgerät (183) assoziiertes Konto gemäß mobilgerätebezogenen Daten betrifft, wobei das Bestimmungsgerät (108) einen prozessorgestützten Anwendungsserver (134) und einen Speicher (122) umfasst, der mit oder in dem prozessorgestützten Anwendungsserver arbeitet und Befehle und Codierung speichert, die bei Ausführung durch den prozessorgestützten Anwendungsserver zum Durchführen des Verfahrens nach Anspruch 1 konfiguriert sind.

**Revendications**

**1.** Procédé, au niveau d'un dispositif de vérification, d'autorisation d'une opération en ligne devant être réalisée par un dispositif informatique (189), l'opération en ligne se rapportant à un compte associé à un dispositif mobile (183) en fonction de données pertinentes au dispositif mobile, le procédé comprenant :

· l'association d'un dispositif mobile (183) à un compte, par l'intermédiaire d'un dispositif de vérification (108) enregistrant dans une base de données un identifiant pertinent au dispositif mobile avec un numéro de compte, ou avec un code se rapportant au numéro de compte ;
· le dispositif de vérification (108) recevant des données de proximité à partir du dispositif mobile (183) ou à partir d'un dispositif informatique (189), le dispositif mobile (183) et le dispositif informatique (189) ayant été appariés à un réseau san fil (319), dans lequel les données de proximité en provenance du dispositif mobile comprennent l'appariement d'enregistrements incluant des données d'intervalle de temps d'appariement et l'identifiant et l'adresse IP (335) du dispositif informatique (189) qui est lié de manière communicative au dispositif mobile (183) par l'intermédiaire du réseau sans fil (319), dans lequel les données de proximité en provenance du dispositif informatique comprennent l'appariement d'enregistrements incluant des données d'intervalle de temps d'appariement et l'identifiant et l'adresse IP (335) du dispositif informatique (189) et l'identifiant du dispositif mobile (183) par l'intermédiaire du réseau sans fil (319) ;
· le dispositif de vérification (108) enregistrant le dispositif informatique (189) en tant qu'homologage (ou « peering ») relatif au dispositif mobile (183) dans une base de données IP de dispositif client (10.1) si une durée de temps de l'appariement d'à la fois le dispositif mobile (183) et le dispositif informatique (189) au réseau sans fil (319) en conjonction l'un avec l'autre se situe au-delà d'un seuil temporel ;
· le dispositif de vérification (108) recevant (702) un message de demande de validation (110) pour autoriser une opération en ligne impliquant au moins un site Web et se rapportant au compte, le message de demande de validation (110) comprenant le numéro de compte ou le code se rapportant au numéro de compte et un temps de validation de l'opération en ligne, le compte associé au dispositif mobile (183) dans la base de données, le dispositif de vérification (108) recevant en outre l'au moins un site Web ;
· le dispositif de vérification (108) :

■ obtenant (703) l'adresse IP du dispositif informatique (189) qui est enregistré en tant qu'homologage relatif au dispositif mobile (183) à partir de la base de données IP de dispositif client (10.1), et envoyant (704) un message de demande (641) au dispositif informatique (189) pour demander un historique de navigation Web (510) d'une période de temps englobant le temps de validation à partir du dispositif informatique, et
■ si le dispositif de vérification (108) ne parvient pas à obtenir l'adresse IP du dispositif informatique (189), alors l'envoi (704) d'un message de demande (641) au dispositif mobile (183) pour demander un historique de navigation Web (510) d'une période de temps englobant le temps de validation à partir du dispositif mobile ;

le dispositif de vérification (108) recevant (704) un message de réponse (642) comprenant l'historique de navigation Web demandé (510) ;
· le dispositif de vérification (108) réalisant (706) un processus de validation pour déterminer si l'opération en ligne du message de demande de validation (110) doit être autorisée grâce à la validation de la pertinence de l'historique de navigation Web (510) à l'opération en ligne, dans lequel l'opération en ligne est autorisée si l'historique de navigation Web (510) comprend l'au moins un site Web impliqué dans la réalisation de l'opération en ligne lors du temps de validation ; et,

· le dispositif de vérification (108) envoyant (709) par l'intermédiaire d'un réseau le résultat du processus de validation (643) au dispositif mobile (183) afin d'autoriser ou de ne pas autoriser l'opération en ligne.

**2.** Procédé de la revendication 1, dans lequel la réception du message de demande de validation (110) comprend :

· la réception d'informations se rapportant au paiement pour un achat auprès d'un magasin en ligne avec le compte associé au dispositif mobile par l'intermédiaire d'un site Web ; ou,
· la réception d'informations se rapportant à un transfert de paiement depuis le compte associé au dispositif mobile vers un compte de réception.

**3.** Procédé de la revendication 1, dans lequel la réception de données de proximité comprend un élément quelconque ou une combinaison d'éléments parmi :

· la réception d'un identifiant d'un point d'accès sans fil à courte portée lié de manière communicative (107) ;
· la réception d'une liste actuelle détectée de points d'accès sans fil à courte portée (107) disponibles pour une liaison communicative au niveau d'une localisation où une transaction correspondant à l'opération en ligne doit être effectuée, la liste actuelle détectée comprenant des identifiants de points d'accès sans fil à courte portée liés de manière communicative enregistrés par le dispositif mobile au niveau de, ou au sein d'un seuil temporel à partir de, la jonction de l'opération en ligne.

**4.** Procédé de la revendication 1, dans lequel l'enregistrement du dispositif informatique (189) en tant qu'homologage relatif au dispositif mobile (183) si la durée de temps d'un appariement communicatif d'à la fois le dispositif mobile (183) et le dispositif informatique (189) au réseau sans fil (319) se situe au-delà du seuil temporel, comprend un élément quelconque ou une combinaison d'éléments parmi :

l'enregistrement de l'identifiant du dispositif informatique avec un élément quelconque ou une combinaison d'éléments parmi le numéro ou code de compte, ou, un identifiant pertinent au dispositif mobile (183), comprenant un dispositif mobile ou un code, nom ou numéro pertinents au compte ;
· la détermination du fait que le dispositif mobile (183) et le dispositif informatique (189) sont appariés au réseau sans fil (319) pendant une durée de temps totale qui dépasse le seuil temporel.

**5.** Procédé de la revendication 1, dans lequel la réalisation du processus de validation comprend en outre un élément quelconque parmi :

l'envoi d'un message d'autorisation pour traiter l'opération en ligne ;
· l'envoi d'un message de rejet pour ne pas traiter l'opération en ligne.

**6.** Procédé de la revendication 1, dans lequel l'envoi du résultat du processus de validation comprend un élément quelconque ou une combinaison d'éléments parmi :

· l'envoi d'un indicateur de statut valide si l'opération en ligne est autorisée ;
· l'envoi de la vérification d'un historique de navigation Web envoyé par le dispositif mobile se rapportant à l'opération en ligne ;
l'envoi de la vérification d'un point d'accès (107) installé à la localisation de l'opération en ligne dans la liste actuelle détectée envoyée par le dispositif mobile d'une pluralité de points d'accès sans fil à courte portée enregistrés au niveau de, ou au sein d'un seuil temporel à partir d'une jonction de l'opération en ligne ;
· l'envoi de la vérification d'un enregistrement d'un message envoyé pour un transfert d'argent se rapportant au compte associé au dispositif mobile ;
· l'envoi de la vérification d'un enregistrement stocké dans une mémoire de dispositif mobile pour un code généré ou importé afin de réaliser l'opération en ligne ;
· l'envoi d'un code à chaînes de blocs affecté à une devise unitaire dans un transfert de paiement.

**7.** Procédé de la revendication 1, dans lequel l'envoi (709) du résultat du processus de validation dans le cas où l'opération en ligne n'a pas été autorisée comprend un élément quelconque ou une combinaison d'éléments parmi :

l'envoi d'un indicateur de statut invalide pour déclencher une alerte ;
· la notification à un groupe quelconque ou une combinaison de groupes distincts de noeuds de réception grâce à l'envoi d'un message via un réseau au dispositif mobile (183) ou au dispositif informatique (189), dans lequel le message comprend un élément quelconque ou plusieurs éléments parmi : un courriel, un signal, un message en communication instantanée, un message téléphonique vocal automatique, un message multimédia ;
· la notification à des utilisateurs sélectionnés parmi un premier groupe de noeuds de réception, comprenant un élément quelconque ou plusieurs éléments parmi un locataire, un propriétaire, un gérant de propriété, un gérant d'établissement, un employé ou un visiteur ;
· la notification à des utilisateurs sélectionnés parmi un deuxième groupe de noeuds de réception, comprenant un élément quelconque ou plusieurs éléments parmi une banque d'acquisition, une banque d'émission de comptes, un commerçant, ou un réseau de paiement ;
· l'envoi de signaux/de données à un dispositif d'accès lié de manière communicative en tant que troisième noeud de réception durant une alerte déclenchée, qui reçoit le signal d'alerte et refuse l'autorisation de l'opération en ligne ;
· l'enregistrement d'une alerte déclenchée dans une base de données.

**8.** Procédé de la revendication 1, comprenant en outre l'envoi du résultat du processus de validation (643) à un élément quelconque ou plusieurs éléments parmi :

. un processeur et un serveur d'applications couplé à la mémoire ou un système de commande d'une banque d'émission (104) gérant le compte associé au dispositif mobile ;
· un processeur et un serveur d'applications couplé à la mémoire ou un système de commande d'une banque d'acquisition (103) gérant un compte associé à un commerçant ;
· un processeur et un serveur d'applications couplé à la mémoire ou un système de commande d'une institution gérant un compte d'utilisateur ;
un dispositif de commande changeant à un état opérationnel à partir d'un état non opérationnel lors de la réception d'une autorisation de processus de validation.

**9.** Procédé de la revendication 1, dans lequel le compte comprend un élément quelconque parmi :

• un compte en banque émis par une banque ;
• un compte de carte de crédit émis par une banque ;
un compte de carte de crédit émis par un réseau de paiements ;
· un compte de carte de débit émis par une institution financière;
· un compte d'employé émis par une société d'employés ; un compte de membre émis par un club ;
· une carte de paiement émise par une institution financière ;
· un compte de résident émis par un propriétaire de biens immobiliers ;
· un compte de locataire émis par une banque, un hôtel, ou un établissement d'hébergement ;
· un compte de véhicule émis par un propriétaire de véhicule ;
· un compte client de véhicule émis par une société de gestion ou de location de véhicules.

**10.** Dispositif de vérification pour autoriser une opération en ligne destinée à être réalisée par un dispositif informatique (189), l'opération en ligne se rapportant à un compte associé à un dispositif mobile (183) en fonction de données pertinentes au dispositif mobile, le dispositif de vérification (108) comprenant un serveur d'applications monté sur processeur (134) et une mémoire (122), opérant avec ou au sein du serveur d'applications monté sur processeur, stockant des instructions et un codage, qui lorsqu'ils sont exécutés par le serveur d'applications monté sur processeur, sont configurés pour réaliser le procédé de la revendication 1.

FIG.1
100

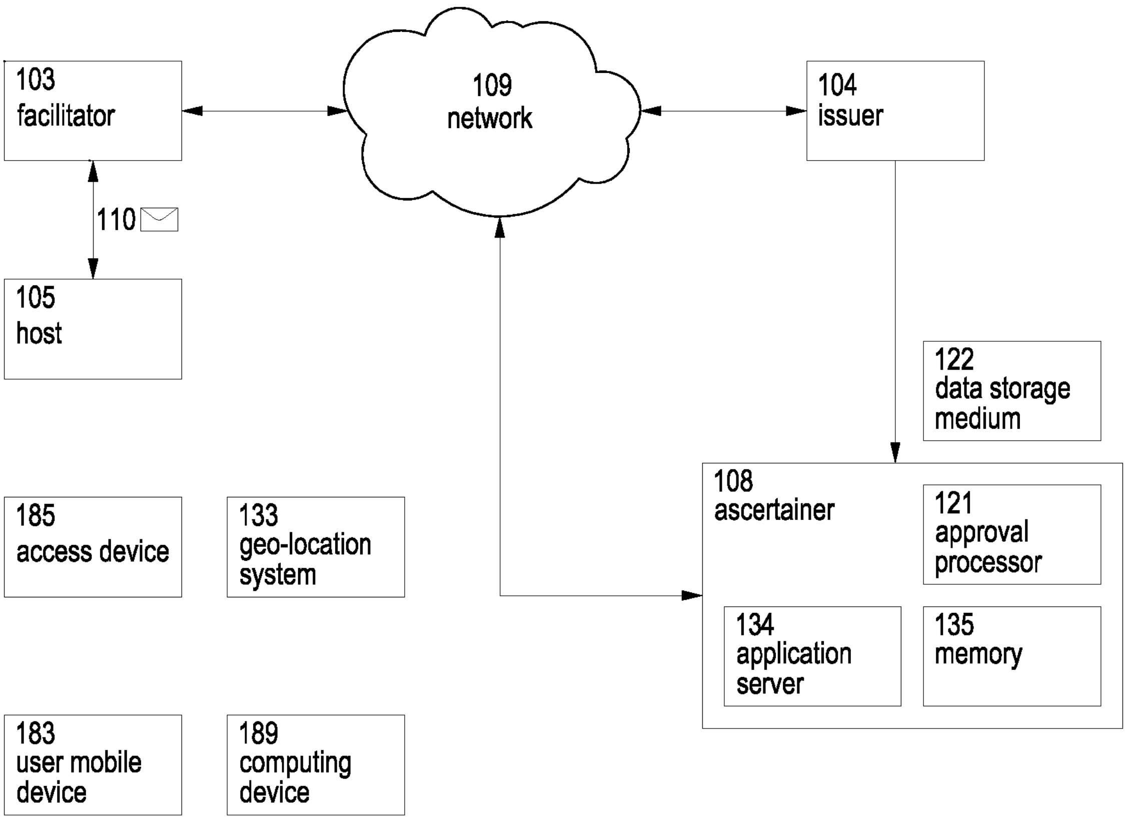
103
facilitator
109
network
104
issuer
110
105
host
122
data storage
medium
108
ascertainer
121
approval
processor
185
access device
133
geo-location
system
134
application
server
135
memory
183
user mobile
device
189
computing
device

FIG.2A

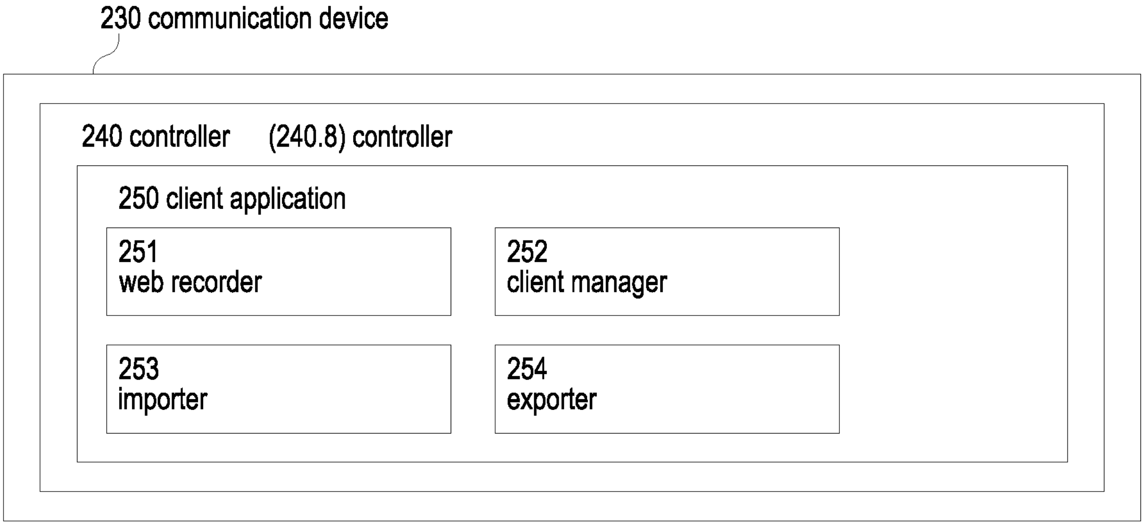


FIG.2B

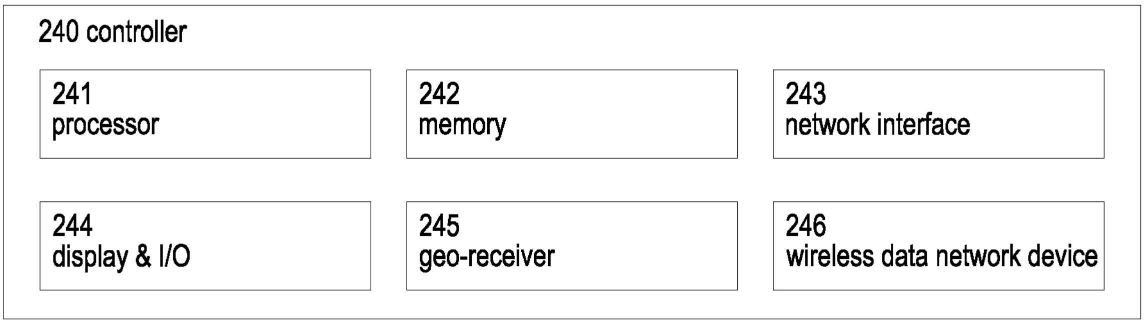


FIG.2C

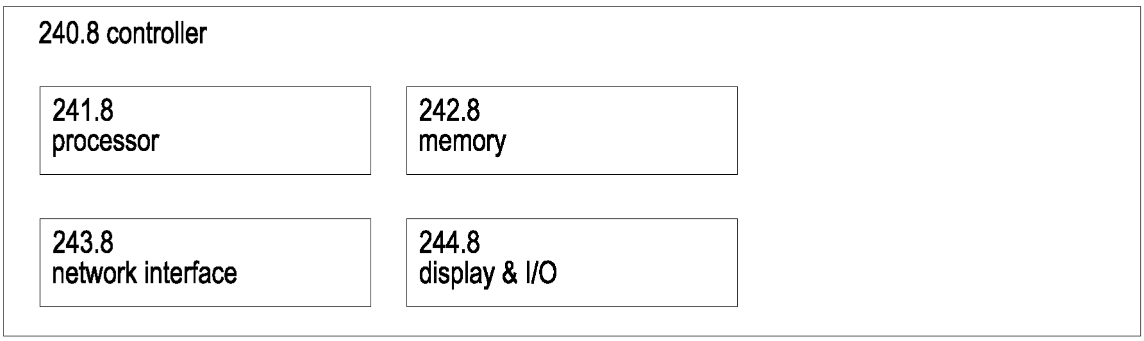

FIG.3

300

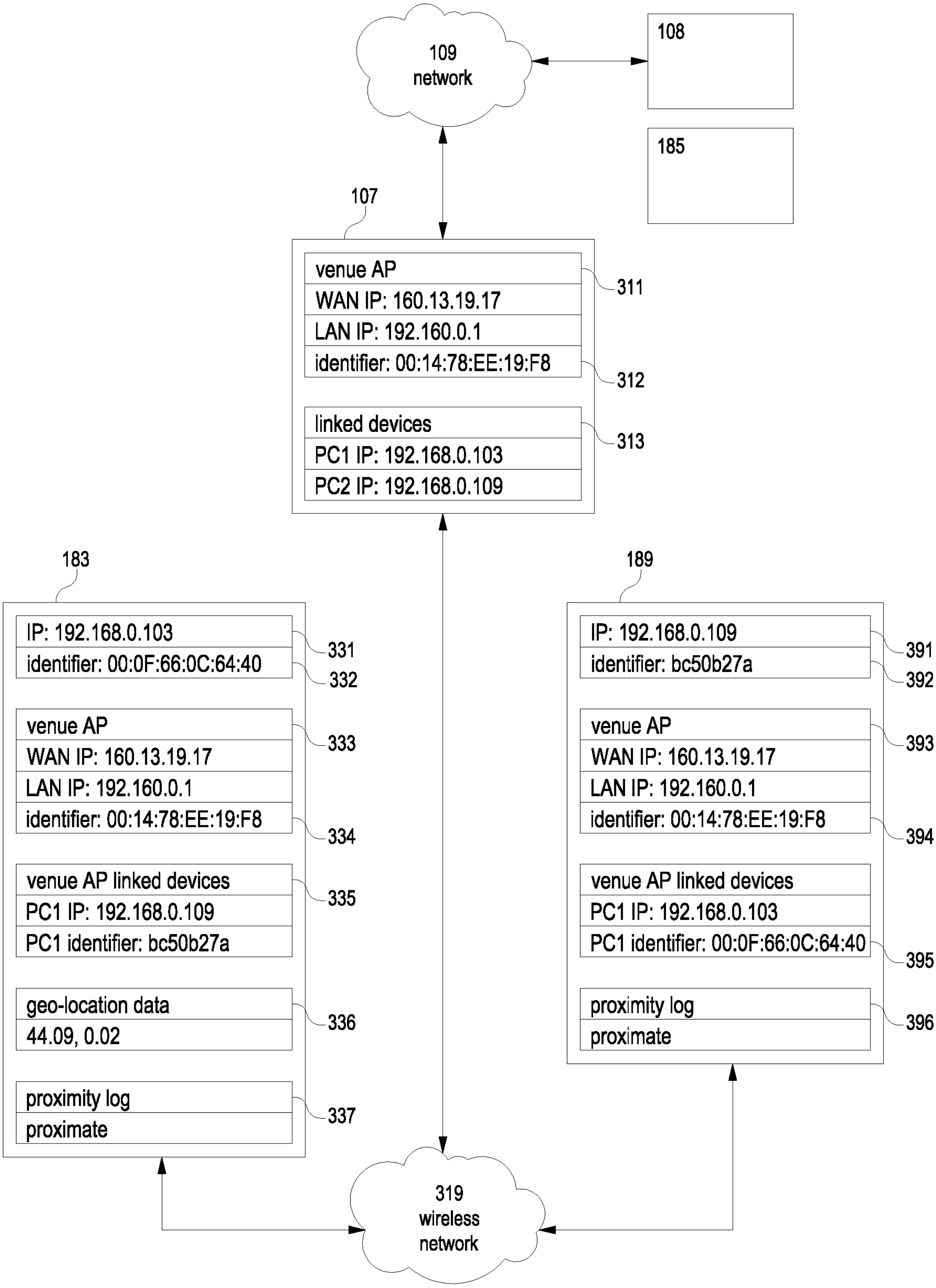
109
network
108
185
107
venue AP
WAN IP: 160.13.19.17
LAN IP: 192.160.0.1
identifier: 00:14:78:EE:19:F8
311
312
linked devices
PC1 IP: 192.168.0.103
PC2 IP: 192.168.0.109
313
183
IP: 192.168.0.103
identifier: 00:0F:66:0C:64:40
331
332
venue AP
WAN IP: 160.13.19.17
LAN IP: 192.160.0.1
identifier: 00:14:78:EE:19:F8
333
334
venue AP linked devices
PC1 IP: 192.168.0.109
PC1 identifier: bc50b27a
335
geo-location data
44.09, 0.02
336
proximity log
proximate
337
189
IP: 192.168.0.109
identifier: bc50b27a
391
392
venue AP
WAN IP: 160.13.19.17
LAN IP: 192.160.0.1
identifier: 00:14:78:EE:19:F8
393
394
venue AP linked devices
PC1 IP: 192.168.0.103
PC1 identifier: 00:0F:66:0C:64:40
395
proximity log
proximate
396
319
wireless
network

FIG.4A

400

| 401 | 402 | | 332 | 312 | 403 | 404 | 392 | 405 |
|---|---|---|---|---|---|---|---|---|
| proximity time span | paired | unpaired | identifier | venue AP identifier | location | status | identifier | peering status |
| 2015-12-01 | 18:00 | 23:00 | 00:0F:66:0C:64:40 | 00:14:78:EE:19:F8 | 44.09, 0.02 | | bc50b27a | |
| 2015-12-02 | 19:06 | 23:06 | 00:0F:66:0C:64:40 | 00:14:78:EE:19:F8 | 44.09, 0.02 | | bc50b27a | |
| 2015-12-03 | 18:12 | 23:05 | 00:0F:66:0C:64:40 | 00:14:78:EE:19:F8 | 44.09, 0.02 | | bc50b27a | |
| 2015-12-04 | 19:10 | 23:50 | 00:0F:66:0C:64:40 | 00:14:78:EE:19:F8 | 44.09, 0.02 | | bc50b27a | |
| 2015-12-05 | 18:18 | 23:08 | 00:0F:66:0C:64:40 | 00:14:78:EE:19:F8 | 44.09, 0.02 | | bc50b27a | |
| 2015-12-06 | 19:55 | 22:56 | 00:0F:66:0C:64:40 | 00:14:78:EE:19:F8 | 44.09, 0.02 | | bc50b27a | |
| 2015-12-07 | 18:30 | 23:24 | 00:0F:66:0C:64:40 | 00:14:78:EE:19:F8 | 44.09, 0.02 | related | bc50b27a | related |
| 2015-12-08 | 18:23 | 23:21 | 00:0F:66:0C:64:40 | 00:14:78:EE:19:F8 | 44.09, 0.02 | | bc50b27a | |
| 2015-12-09 | 18:40 | 23:09 | 00:0F:66:0C:64:40 | 00:14:78:EE:19:F8 | 44.09, 0.02 | | bc50b27a | |
| 2015-12-10 | 19:20 | 22:50 | 00:0F:66:0C:64:40 | 00:14:78:EE:19:F8 | 44.09, 0.02 | | bc50b27a | |
| 2015-12-11 | 18:01 | 23:04 | 00:0F:66:0C:64:40 | 00:14:78:EE:19:F8 | 44.09, 0.02 | | bc50b27a | |
| 2015-12-12 | 19:45 | 23:15 | 00:0F:66:0C:64:40 | 00:14:78:EE:19:F8 | 44.09, 0.02 | | bc50b27a | |
| 2015-12-13 | 17:23 | 23:13 | 00:0F:66:0C:64:40 | 00:14:78:EE:19:F8 | 44.09, 0.02 | | bc50b27a | |
| 2015-12-14 | 18:08 | 23:03 | 00:0F:66:0C:64:40 | 00:14:78:EE:19:F8 | 44.09, 0.02 | | bc50b27a | |

FIG.4B

client device IP database

10.1

| 411.1 | 411.2 | 412.1 | 412.2 | 413 | 414 | 415 | 416 |
|---|---|---|---|---|---|---|---|
| primary device identifier | secondary device identifier | status | status | venue AP linked device identifier | geo-location | peering status | IP |
| 00:0F:66:0C:64:40 | bc50b27a | related | related | 00:14:78:EE:19:F8 | 44.09, 0.02 | related | 192.168.0.109 |

FIG.4C
420

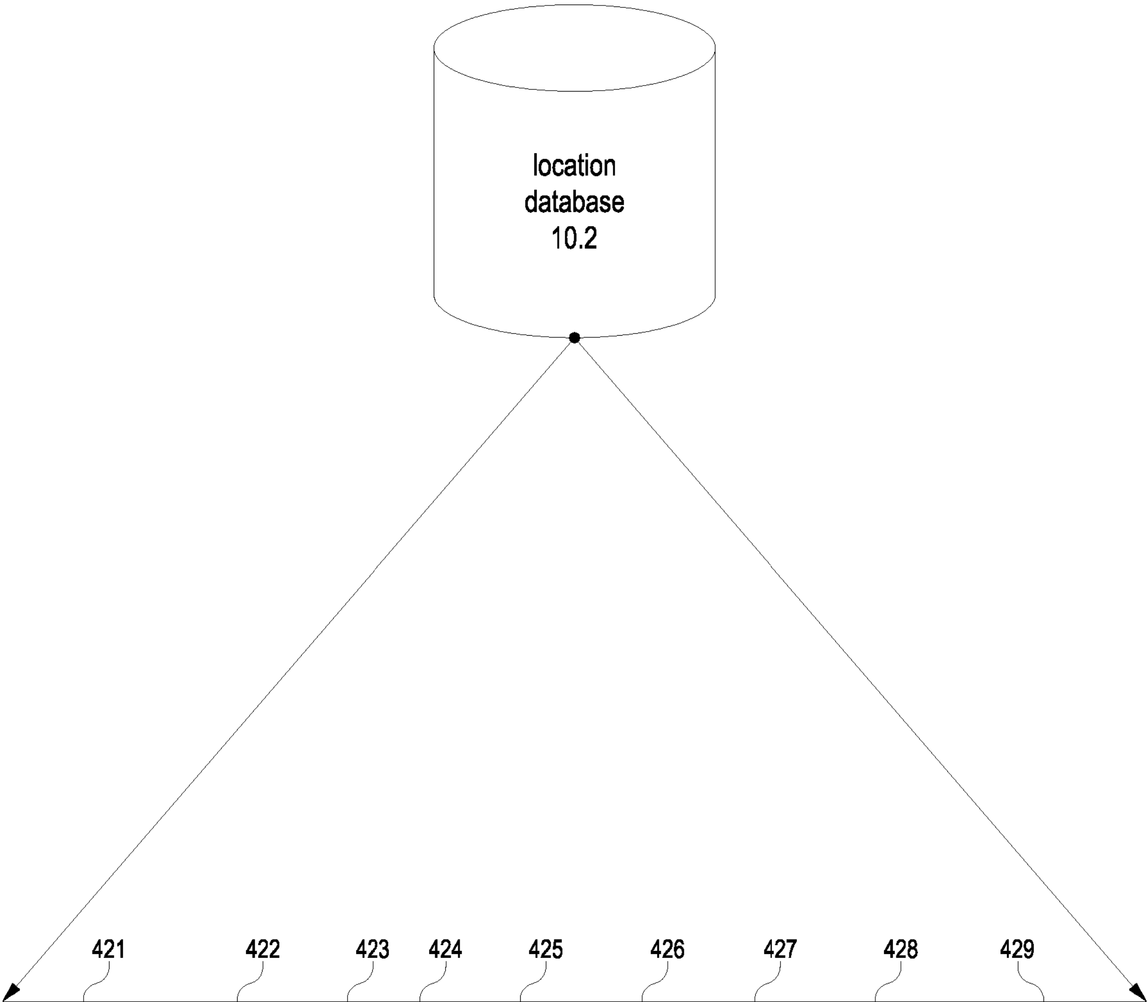


| location name | geo-location | HID | TID | location access device properties | location based validation status | institute identifier | location description | other location properties |
|---|---|---|---|---|---|---|---|---|
| Y6NN22C | 48, 0.2 | 0121 | 0025 | NFC | yes | 460999 | Aberdeen Mall, Richmond, Canada | NET_GEAR 80EE |

FIG.5A

500

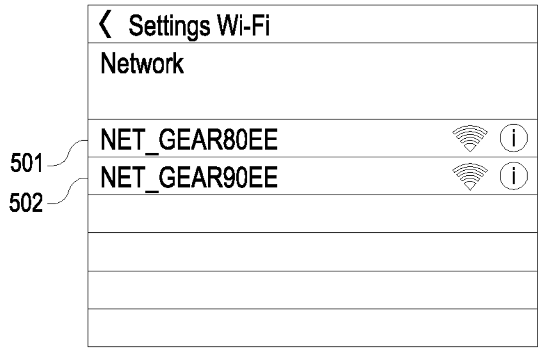


FIG.5B

510

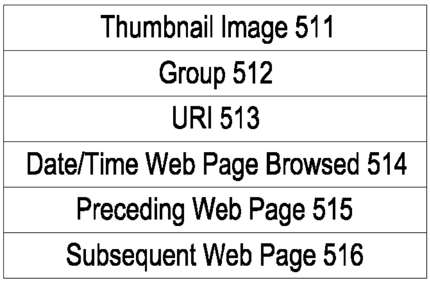


FIG.5C

520

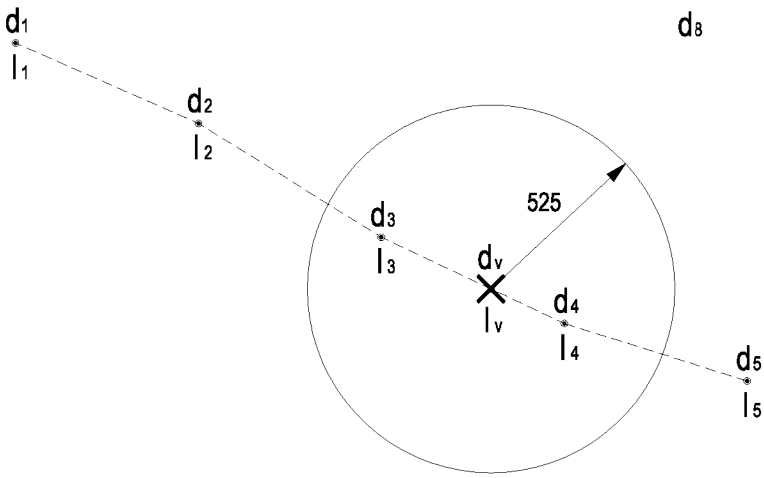

FIG.6A

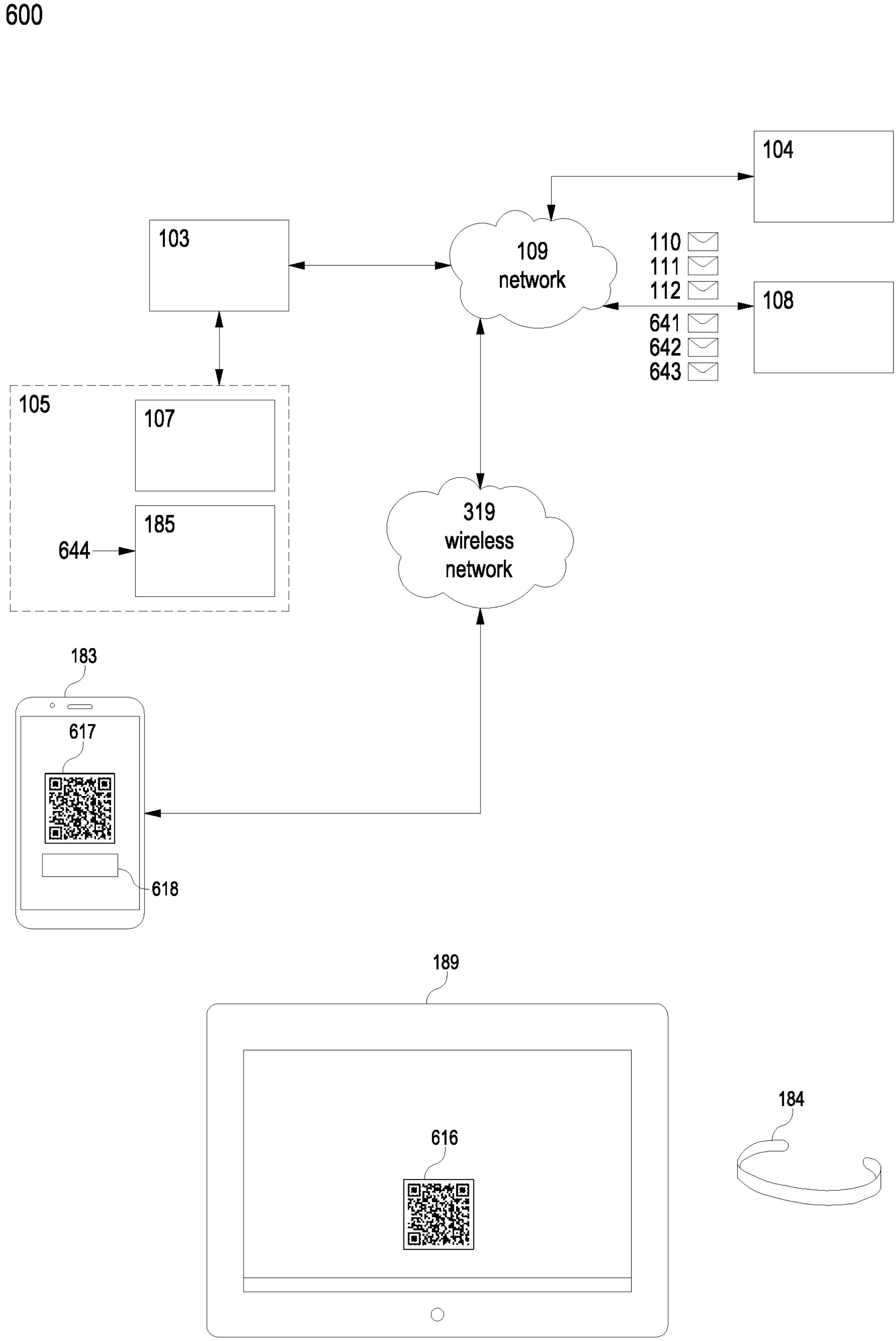
600
104
103
109
network
110
111
112
108
641
642
643
105
107
185
644
319
wireless
network
183
617
618
189
616
184

FIG.6B

650

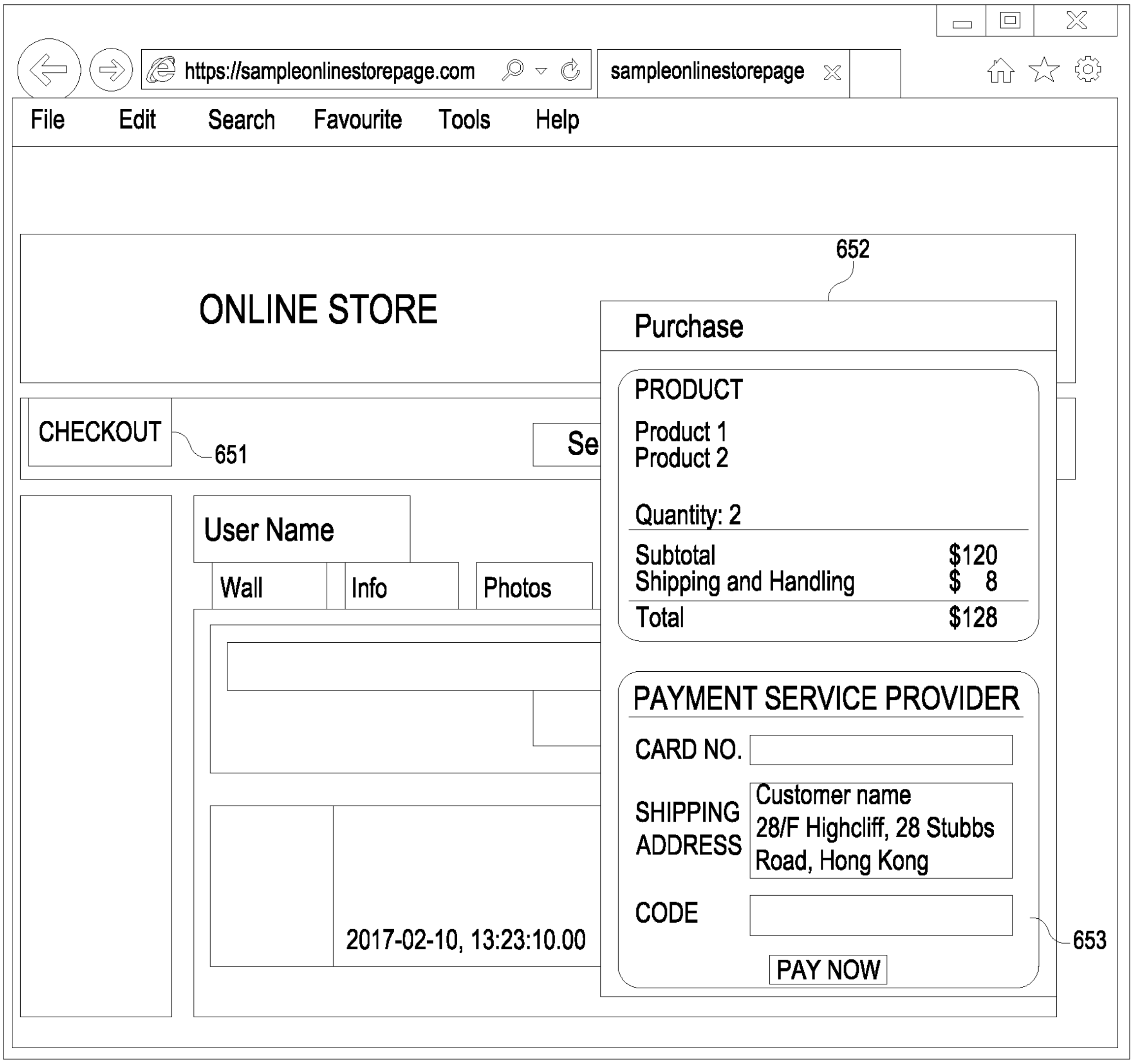
https://sampleonlinestorepage.com
sampleonlinestorepage
File
Edit
Search
Favourite
Tools
Help
ONLINE STORE
652
Purchase
CHECKOUT
651
Se
PRODUCT
Product 1
Product 2
Quantity: 2
User Name
Subtotal $120
Shipping and Handling $ 8
Wall
Info
Photos
Total $128
PAYMENT SERVICE PROVIDER
CARD NO.
SHIPPING ADDRESS
Customer name
28/F Highcliff, 28 Stubbs Road, Hong Kong
CODE
653
2017-02-10, 13:23:10.00
PAY NOW

FIG.6C
680

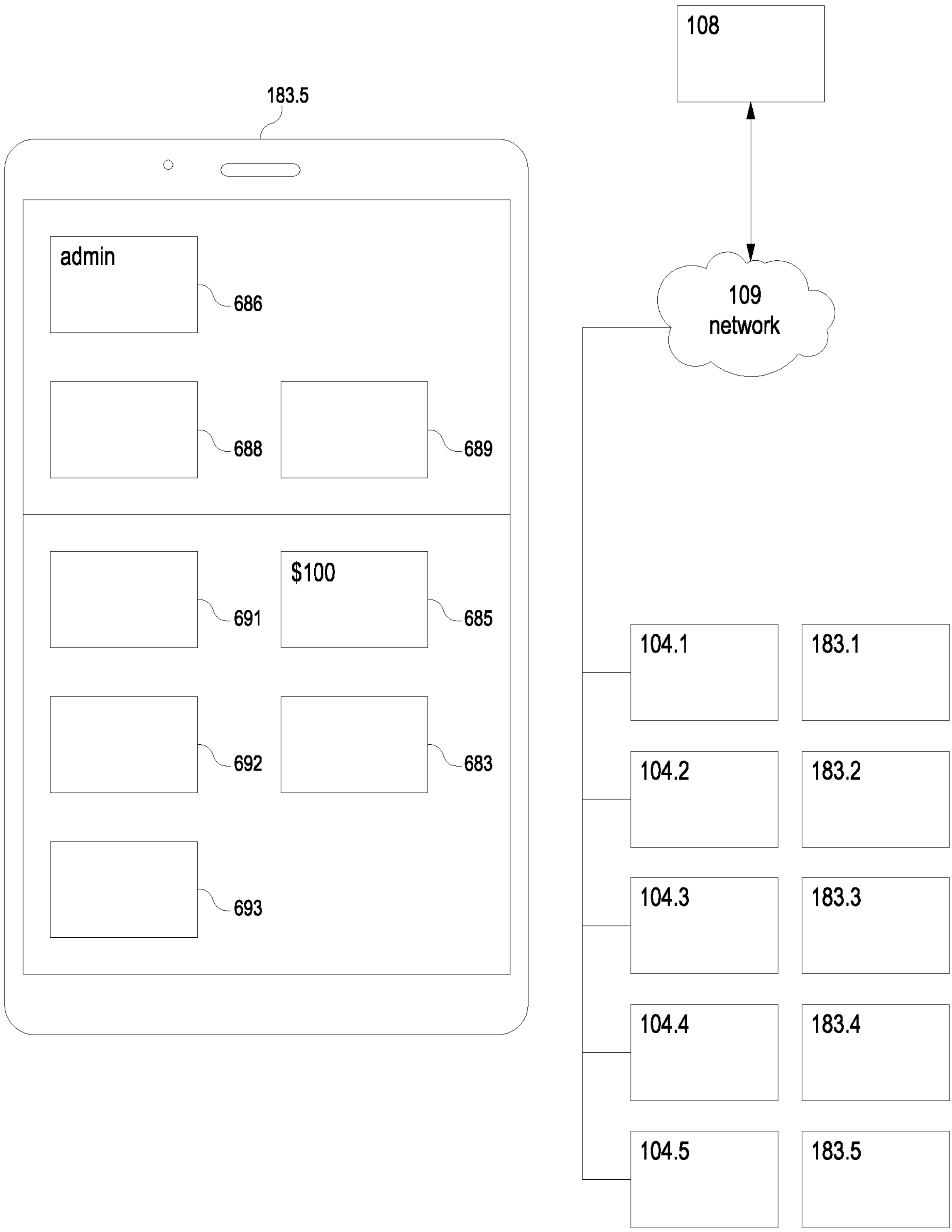
108
109
network
183.5
admin
686
688
689
691
$100
685
692
683
693
104.1
183.1
104.2
183.2
104.3
183.3
104.4
183.4
104.5
183.5

FIG.7
700

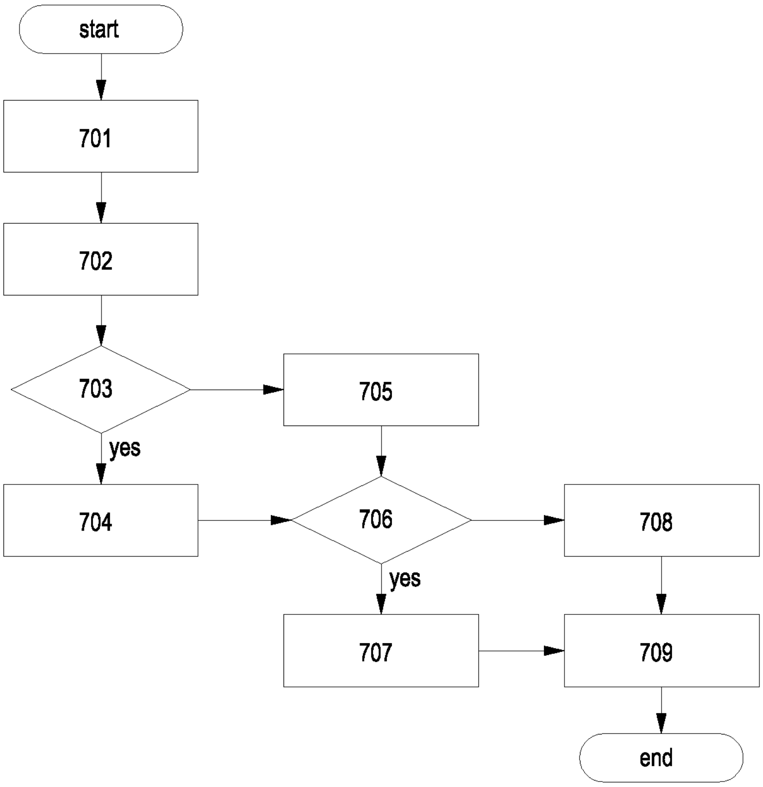


FIG.8
800
810
820
830
840
850

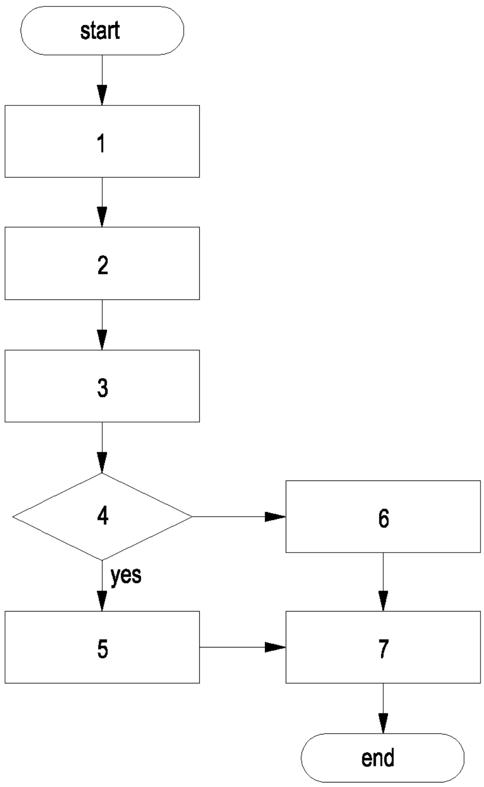

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20060237531 A1
- US 20060273158 A1
- US 20120203605 A